# EUROPÄISCHE PATENTSCHRIFT

(11) **EP 4 163 902 B1**
(45) Veröffentlichungstag und Bekanntmachung des Hinweises auf die Patenterteilung: **31.12.2025**
(21) Anmeldenummer: 21201517.6
(22) Anmeldetag: 07.10.2021
(51) Int. Cl.: G09B 23/10

(54) **VERSUCHSGERÄT ZUR DURCHFÜHRUNG VON VERSUCHEN ZUR ROTATIONSDYNAMIK**
EXPERIMENTAL APPARATUS FOR PERFORMING EXPERIMENTS FOR ROTATIONAL DYNAMICS
APPAREIL D'ESSAI DESTINÉ À LA MISE EN OEUVRE DES ESSAIS SUR LA DYNAMIQUE DE ROTATION

(43) Veröffentlichungstag der Anmeldung: 12.04.2023
(73) Patentinhaber: G.U.N.T. Gerätebau GmbH, 22885 Barsbüttel (DE)
(72) Erfinder: Eichler, Enrico, 22089 Hamburg (DE); Bilowski, Jörg, 22941 Delingsdorf (DE)
(74) Vertreter: Hauck Patent- und Rechtsanwälte PartmbB

(56) Entgegenhaltungen:
- CN-A- 108 877 418
- US-A1- 2010 105 012
- N/A: "TM 600 Centrifugal force", 12 May 2020 (2020-05-12), XP055902377, Retrieved from the Internet <URL:https://www.gunt.de/images/datasheet/1408/TM-600-Centrifugal-force-gunt-1408-pdf_1_en-GB.pdf> [retrieved on 20220317]
- N/A: "TM 605 Coriolis force", 7 December 2018 (2018-12-07), XP055902378, Retrieved from the Internet <URL:https://www.gunt.de/images/datasheet/1409/TM-605-Coriolis-force-gunt-1409-pdf_1_en-GB.pdf> [retrieved on 20220317]

## Beschreibung

Die Erfindung betrifft ein Versuchsgerät zur Durchführung von Versuchen zur Rotationsdynamik.

Das Versuchsgerät dient der technischen Ausbildung auf dem Gebiet der Rotationsdynamik, insbesondere an Universitäten, Fachhochschulen und Technikerschulen.

Bekannte Versuchsgeräte zur Untersuchung von Gesetzmäßigkeiten rotierender Massen der G.U.N.T. Gerätebau GmbH umfassen insbesondere die Versuchsgeräte TM 600 für Untersuchungen zur Zentrifugalkraft und TM 605 für Untersuchungen zur Corioliskraft.

Mit dem Versuchsgerät TM 600 können Zentrifugalkräfte unter verschiedenen Bedingungen untersucht werden. Kernstück des Versuchsgerätes ist ein rotierender Arm auf einer vertikalen Drehachse. Unterschiedliche Massen werden an dem Arm verankert. Der Bahnradius kann über die Position der Masse auf dem Arm manuell eingestellt werden. Es stehen drei unterschiedliche Massen zur Verfügung. Die Zentrifugalkraft wird vom Arm über ein Hebelsystem und einen Druckstab auf einen feststehenden Biegebalken übertragen. Die kraftproportionale Auslenkung wird über ein elektronisches Messsystem mit einem Wegeaufnehmer erfasst und digital angezeigt. Die ebenfalls digital angezeigte Drehzahl des geregelten Antriebsmotors kann stufenlos eingestellt werden. Der Betrieb ist nur bei ordnungsgemäßem Anbringen einer transparenten Schutzhaube möglich.

Für die Verstellung der Position der Masse muss der Arm angehalten werden. Die Verstellung der Massen oder die Verwendung unterschiedlicher Massen kann zu Unwuchten führen. Die Messgenauigkeit ist durch die Kraftübertragung vom Arm auf den Wegaufnehmer eingeschränkt.

Mit dem Versuchsgerät TM 605 wird der Einfluss der Corioliskraft in einem rotierenden Bezugssystem anschaulich dargestellt. Ein transparenter Wasserbehälter mit Tauchpumpe wird auf einem drehbaren Ausleger in Rotation versetzt. Innerhalb dieses rotierenden Bezugssystems erzeugt die Pumpe einen Wasserstrahl in radialer Richtung. In Abhängigkeit vom Förderstrom der Pumpe bzw. Wassergeschwindigkeit sowie von Drehzahl und Drehrichtung wird der Wasserstrahl aufgrund der Corioliskraft scheinbar abgelenkt. Der Grad der Ablenkung kann mittels einer Skala am Wasserbehälter bestimmt werden. Die Drehzahl ist stufenlos einstellbar, wird elektronisch geregelt und digital angezeigt.

Aufgrund der Versuchsanordnung kann es zu Unwuchten kommen, insbesondere wenn der Wasserbehälter unterschiedlich befüllt oder der Arm mit verschiedenen Drehzahlen betrieben wird.

Die CN 108877418 A beschreibt ein Versuchsgerät zur Durchführung von Versuchen zu Corioliskraft, das einen Drehbewegungsmechanismus, einen linearen Synchronbewegungsmechanismus und einen Steuerungsmechanismus zum Erfassen von Messdaten umfasst. Der Drehbewegungsmechanismus umfasst einen luftschwimmenden Drehtisch, einen pneumatischen Durchgang und einen ersten Drehmomentmotor. Der lineare synchrone Bewegungsmechanismus umfasst eine erste lineare Bewegungseinheit, eine zweite lineare Bewegungseinheit und eine dritte vertikale Bewegungseinheit. Zwei Teile von zueinander senkrecht linearen Bewegungseinheiten führen eine relative lineare synchrone Bewegung aus, wobei ein vertikaler linearer Mechanismus auch eine relative lineare, vertikale Bewegung ausführt.

Die EP 2 351 001 B1 beschreibt einen Bewegungs- und Orientierungssimulator mit einer kardanischen Aufhängung für eine Kabine, die in einem Heave-Schlitten angeordnet ist, der in einem Schlittenkorb linear bewegbar ist. Derartige Simulatoren werden zur Ausbildung und zum Sicherheitstraining von Piloten verwendet. Ziel solcher Simulatoren ist es, Flugzustände möglichst wirklichkeitsnah zu simulieren, wie sie auch in Extremfällen im Flugbetrieb vorkommen können.

Davon ausgehend liegt der Erfindung die Aufgabe zugrunde, ein Versuchsgerät zur Durchführung von Versuchen zur Rotationsdynamik zur Verfügung zu stellen, das Unwuchten besser vermeidet und genaue Messungen ermöglicht.

Die Aufgabe wird durch ein Versuchsgerät gemäß Anspruch 1 gelöst. Vorteilhafte Ausführungsarten der Erfindung sind in Unteransprüchen und in der nachfolgenden Beschreibung angegeben.

Das erfindungsgemäße Versuchsgerät zur Durchführung von Versuchen zur Rotationsdynamik umfasst
- mindestens einen Arm,
- ein Drehlager, an dem der Arm um eine vertikale Achse drehbar gelagert ist,
- eine Antriebseinrichtung, die mit dem Arm gekoppelt ist, um diesen um die vertikale Drehachse zu drehen,
- zwei an dem mindestens einen Arm gehaltene Massen und
- mindestens eine mit den beiden Massen gekoppelte weitere Antriebseinrichtung, mittels der die beiden Massen synchron in entgegengesetzte Richtungen bezüglich der vertikalen Achse verlagerbar sind,
- ein Basismodul mit den folgenden Merkmalen:
- ein Gehäuse,
- einen Drehteller mit vertikaler Drehachse an der Oberseite des Gehäuses zum Aufsetzen eines Aufsetztellers eines erfindungsgemäßen Aufsetzmoduls mit einer Versuchsanordnung für Versuche zur Rotationsdynamik,
- ein Drehlager im Gehäuse, an dem der Drehteller um seine vertikale Achse drehbar gelagert ist,
- eine Kupplungseinrichtung an dem Drehteller zum Kuppeln mit einer weiteren Kupplungseinrichtung am Aufsetzteller eines erfindungsgemäßen Aufsetzmoduls, um den Drehteller drehfest mit dem Aufsetzteller zu verbinden, und
- einen im Gehäuse angeordneten Antriebsmotor, mit dem der Drehteller gekoppelt ist, um diesen um die Drehachse zu drehen,
und ein Aufsetzmodul mit den folgenden Merkmalen:
- eine Versuchsanordnung für Versuche der Rotationsdynamik auf einem Aufsetzteller zum Aufsetzen auf einen Drehteller des Basismoduls und eine weitere Kupplungseinrichtung am Aufsetzteller zum Kuppeln mit einer Kupplungseinrichtung an dem Drehteller des Basismoduls.

Das erfindungsgemäße Versuchsgerät ermöglicht die Durchführung von Versuchen zur Rotationsdynamik, bei denen die Position einer oder beider Massen am Arm verändert wird, beispielsweise durch Versuche zur Zentrifugalkraft, zur Corioliskraft oder zum Drehimpuls. Bei den Massen handelt es sich um Körper, die bestimmte Massen aufweisen. Das Versuchsgerät weist zusätzlich zur Antriebseinrichtung, die mit dem Arm gekoppelt ist, um diesen um die vertikale Drehachse zu drehen, eine auf dem mindestens einen Arm angeordnete, mit den beiden Massen gekoppelte weitere Antriebseinrichtung auf, mittels der die beiden Massen synchron in entgegengesetzte Richtungen bezüglich der vertikalen Achse verlagerbar sind. Durch die synchrone Verlagerung der beiden Massen in entgegengesetzte Richtungen mittels einer weiteren Antriebseinrichtung wird ein Verstellen der Massen ohne Anhalten des Arms ermöglicht, Unwuchten vermieden, Messungen in einem größeren Bereich ermöglicht und die Sicherheit der Versuchsdurchführung erhöht. Zudem wird hierdurch die Genauigkeit der Untersuchungen verbessert. Infolgedessen können mehr Versuche in einer kürzeren Zeitspanne durchgeführt werden.

Der mindestens eine Arm kann ein einziger Arm mit dem Drehlager an einem Ende des Arms sein. Bei dem mindestens einen Arm kann es sich aber auch um zwei Arme handeln, die sich in entgegengesetzte Richtungen vom Drehlager weg erstrecken. Gemäß einer weiteren Ausführungsart ist der Arm oder sind die Arme geradlinige Arme.

Gemäß einer Ausführungsart der Erfindung umfasst die Antriebseinrichtung einen Antriebsmotor und einen Spindelantrieb mit Gewindespindeln und Spindelmuttern mit gegenläufigen Steigungen. Gemäß einer anderen Ausführungsart umfasst die Antriebseinrichtung einen Antriebsmotor und mindestens ein Riemengetriebe mit zwei Riementrums, die in entgegengesetzte Richtungen verlagerbar sind.

Gemäß einer anderen Ausführungsart umfasst die Antriebseinrichtung einen Antriebsmotor und ein Hebelgetriebe, mittels dem die beiden Massen in entgegengesetzte Richtungen verlagerbar sind.

Aufgrund der Getriebe kommen die Antriebseinrichtungen mit einem Antriebsmotor mit verhältnismäßig geringer Leistung aus. Zudem begünstigen die Getriebe eine genaue Positionierung der Massen an dem mindestens einen Arm des Versuchsgerätes.

Gemäß einer weiteren Ausführungsart umfasst eine Vorrichtung zur Durchführung von Versuchen zur Zentrifugalkraft
- eine Führung, die sich in Längsrichtung des Armes erstreckt,
- einen Schlitten, der an der Führung geführt ist,
- einen oberhalb des Schlittens angeordneten horizontalen Sockelkörper mit einer Halterung, an der mindestens ein Gewicht gehalten ist,
- mindestens zwei vertikale Biegefedern, die in radialer Richtung des Armes zueinander versetzt angeordnet, unten mit dem Schlitten und oben mit dem Sockelkörper verbunden sind,
- einen vertikalen Tragarm, der von dem Schlitten in radialer Richtung zum Sockelkörper versetzt nach oben vorsteht,
- einen an dem Tragarm gehaltenen, auf der Seite des Sockelkörpers vorstehenden und an diesem anliegenden Kraftsensor,
- eine weitere Führung an demselben Arm oder an einem auf der anderen Seite der Drehachse angeordneten und sich in Längsrichtung des Arms erstreckenden weiteren Arm,
- einen entlang der weiteren Führung verlagerbaren weiteren Schlitten,
- ein auf dem weiteren Schlitten angeordnetes Gegengewicht und
- mindestens eine mit dem Schlitten und dem weiteren Schlitten gekoppelte weitere Antriebseinrichtung, mittels der der Schlitten und der weitere Schlitten synchron in entgegengesetzte Richtungen entlang der Führung und der weiteren Führung verlagerbar sind.

Mit dem Versuchsgerät kann die Zentrifugalkraft in Abhängigkeit von der Veränderung des Radius und gegebenenfalls der Masse und der Drehzahl untersucht werden. Für die Veränderung des Radius ist auf dem Arm entlang einer Führung verlagerbar ein Schlitten angeordnet, der eine Halterung aufweist, an der mindestens ein Gewicht gehalten ist. Dadurch, dass die Halterung mit dem mindestens einen Gewicht an Biegefedern gehalten ist, wird eine definierte und quasi reibungsfreie Übertragung der Zentrifugalkräfte von dem mindestens einen Gewicht auf den Kraftsensor ermöglicht und eine hohe Messgenauigkeit erreicht. Der Schlitten ist mit der auf dem mindestens einen Arm angeordneten weiteren Antriebseinrichtung gekoppelt, sodass für die Verlagerung des mindestens einen Gewichtes der Arm nicht angehalten werden muss. Gegenläufig zur Verlagerung des Schlittens wird ein weiterer Schlitten mit einem Gegengewicht entlang einer weiteren Führung mittels der weiteren Antriebseinrichtung verlagert, um Unwuchten zu vermeiden. Auch hierfür muss der rotierende Arm nicht angehalten werden.

Gemäß einer weiteren Ausführungsart weist die Führung und/oder die weitere Führung mindestens eine zum Arm parallele und an den Enden über Lagerhülsen am Arm gehaltene Führungsstange auf und weist der Schlitten und/oder der weitere Schlitten Führungsbuchsen auf, an denen sie auf der mindestens einen Führungsstange geführt sind. Hierdurch wird eine einfache, reibungsarme und sichere Führung der Schlitten erreicht.

Gemäß einer weiteren Ausführungsart ist der Sockelkörper ein horizontal ausgerichteter Block. Gemäß einer weiteren Ausführungsart ist der Block quaderförmig. Der Block kann an mehreren identischen Biegefedern gehalten werden. Gemäß einer weiteren Ausführungsart sind die Biegefedern streifenförmig. Über eine Seite des Blockes kann die Zentrifugalkraft einfach auf den Kraftsensor übertragen werden.

Gemäß einer weiteren Ausführungsart ist die Halterung ein von der Oberseite des Sockelkörpers vertikal vorstehender Lagerzapfen, auf den mindestens ein Gewicht, vorzugsweise ein kreisscheibenförmiges Gewicht, mit einem zentralen Führungsloch aufgeschoben ist. Hierdurch kann das Gewicht besonders einfach gehalten werden.

Gemäß einer weiteren Ausführungsart erstreckt sich ein vertikaler Durchgangskanal durch den Sockelkörper und den Lagerzapfen hindurch, steht von der Oberseite des ersten Schlittens ein weiterer Lagerzapfen vertikal hoch und durch den Durchgangskanal hindurch, ist zwischen dem weiteren Lagerzapfen und dem Lagerzapfen ein umlaufender Luftspalt vorhanden, der eine horizontale Verlagerung des Sockelkörpers bezüglich des ersten Schlittens ermöglicht, weist der weitere Lagerzapfen einen bezüglich des Lagerzapfens nach oben vorstehenden Lagerabschnitt auf, auf den mindestens ein Gewicht mit einem zentralen Führungsloch aufgeschoben ist, wobei der weitere Lagerzapfen unten am Lagerabschnitt radial nach außen vorstehende Rückhaltezapfen aufweist, auf denen das Gewicht aufliegt, wobei das Gewicht radial bezüglich des Führungsloches erstreckte Nuten aufweist und auf dem Lagerabschnitt bezüglich der Rückhaltezapfen drehbar ist, sodass es mit den Nuten über die Rückhaltezapfen hinweg nach unten auf den Lagerzapfen oder in umgekehrter Richtung vom Lagerzapfen auf den weiteren Lagerzapfen schiebbar ist. Der weitere Lagerzapfen ermöglicht eine Lagerung von einem oder mehreren Gewichten. Je nach Versuch können ein oder mehrere Gewichte vom weiteren Lagerzapfen auf den Lagerzapfen verlagert werden, sodass sie an dem Lagerzapfen gehalten werden. Mittels des Kraftsensors wird die auf den Lagerzapfen angeordneten Gewichte wirkende Zentrifugalkraft gemessen. Die übrigen Gewichte verbleiben vertikal oberhalb der auf dem Lagerzapfen gehaltenen Gewichte auf dem weiteren Lagerzapfen. Die insgesamt auf dem Schlitten gehaltenen Gewichte bleiben somit unverändert, unabhängig davon, wieviele der Gewichte an der Messung der Zentrifugalkraft teilhaben. Hierdurch können die Gewichte auf dem Schlitten stets mittels desselben Gegengewichts auf dem weiteren Schlitten kompensiert werden. Zur Vermeidung von Unwuchten ist es nicht erforderlich, die zur Kompensation verwendete Masse an die durch die Messung der Zentrifugalkraft verwendete Masse anzupassen.

Gemäß einer bevorzugten Ausführungsart weist das Versuchsgerät zwei horizontale Arme auf, die sich vom Drehlager aus in entgegengesetzte Richtungen erstrecken, wobei die Führung an dem einen Arm und die weitere Führung an dem anderen, weiteren Arm angeordnet ist. Gemäß einer anderen Ausführungsart umfasst das Versuchsgerät nur einen einzigen Arm, der das Drehlager an einem Ende aufweist und an dem die Führung und die weitere Führung angeordnet sind, vorzugsweise übereinander oder nebeneinander.

Gemäß einer weiteren Ausführungsart weist die weitere Antriebseinrichtung einen Antriebsmotor auf, der an entgegengesetzten Enden vorstehenden Motorwellen aufweist, die parallel zu den Armen ausgerichtet sind, wobei die Motorwellen mit den inneren Enden von zu den Armen parallelen Gewindespindeln mit gegenläufigen Gewindesteigungen verbunden sind, die jeweils an den äußeren Enden an Drehlagern gelagert sind, die an den äußeren Enden der Arme gehalten sind, wobei auf jeder Gewindespindel eine Spindelmutter angeordnet ist und die eine Spindelmutter mit dem Schlitten und die andere Spindelmutter mit dem weiteren Schlitten verbunden ist. Das Getriebe zwischen Antriebsmotor und Schlitten ermöglicht eine besonders präzise Verstellung der Schlitten.

Gemäß einer weiteren Ausführungsart ist der weitere Antriebsmotor ein Schrittmotor. Dies ermöglicht eine besonders einfache und präzise Steuerung des Antriebsmotors und Verlagerung der Schlitten.

Gemäß einer weiteren Ausführungsart ist der weitere Antriebsmotor neben der Drehachse an dem Arm gehalten. Hierdurch werden die auf den Arm wirkenden Zentrifugalkräfte gering gehalten.

Gemäß einer weiteren Ausführungsart ist neben der Drehachse auf dem Arm eine Elektronik angeordnet, die eine mit dem Kraftsensor verbundene Messwerterfassung und/oder eine mit einem Drehwinkelsensor zum Erfassen des Drehwinkels des Antriebsmotors oder einer Gewindespindel verbundene Messwerterfassung und/oder eine mit dem Antriebsmotor verbundene Messwerterfassung und/oder eine mit dem Antriebsmotor verbundene Motorsteuerung umfasst. Die Elektronik ist vorzugsweise auf einer oder mehreren Platinen aufgebaut. Durch die Anordnung neben der Drehachse werden die auf den Arm wirkenden Zentrifugalkräfte gering gehalten.

Gemäß einer weiteren Ausführungsart ist der Kraftsensor über eine Kabelkette mit der Elektronik verbunden. Durch die Kabelkette wird die Leitung zwischen Kraftsensor und Elektronik zum jeweils eingestellten Radius der Gewichte geführt und vor Beschädigung geschützt.

Gemäß einer weiteren Ausführungsart sind die Motorwellen des Antriebsmotors über Kupplungen mit den inneren Enden der Gewindespindeln verbunden. Die Kupplungen dienen in erster Linie zum Ausgleich von Fertigungstoleranzen. Gemäß einer weiteren Ausführungsart sind die äußeren Enden der Gewindespindeln in Drehlagern gelagert, die an dem mindestens einen Arm gehalten sind.

Gemäß einer weiteren Ausführungsart umfasst ein Versuchsgerät zur Durchführung von Versuchen zur Corioliskraft
- eine Führung, die sich in Längsrichtung des Armes auf einer Seite der Drehachse erstreckt,
- einen Schlitten, der an der Führung geführt ist,
- einen vom Schlitten nach oben vorstehenden, vertikalen Tragarm mit einem am oberen Ende in radialer Richtung des Arms vorstehenden Querbalken,
- ein am Querbalken aufgehängtes Pendel,
- eine am Querbalken oder am Tragarm angeordnete Kamera zur Erfassung von Auslenkungen des Pendels,
- einen mit dem Pendel verbundenen, in radialer Richtung des Arms erstreckten und in einem Abstand vom ersten Schlitten festgehaltenen Kompensationsfaden,
- eine weitere Führung, die sich in Längsrichtung des Armes auf einer Seite der Drehachse erstreckt,
- einen an der weiteren Führung geführten weiteren Schlitten und
- mindestens eine mit dem Schlitten und dem weiteren Schlitten gekoppelte weitere Antriebseinrichtung, mittels der der Schlitten und der weitere Schlitten synchron in entgegengesetzte Richtungen entlang des Armes verlagerbar sind.

Mit dem Versuchsgerät kann die Wirkung der Corioliskraft untersucht werden. Dazu bewegt sich ein Schlitten auf einem rotierenden Arm, an dem ein Pendel aufgehängt ist. Die auf das Pendel wirkende Corioliskraft führt zu einer Auslenkung, welche über eine mitdrehende Kamera beobachtet und gemessen werden kann. Die Größe der Auslenkung wird durch die Rotationsdrehzahl und Fahrgeschwindigkeit des Schlittens beeinflusst. Durch den Kompensationsfaden wird eine Beeinflussung der Auslenkung des Pendels durch die Zentrifugalkraft unterbunden. Zudem können durch die Verlagerung des weiteren Schlittens in entgegengesetzter Richtung zur Verlagerung des Schlittens Unwuchten bei der Rotation des Armes vermieden werden. Hierdurch wird die Genauigkeit und die Sicherheit der Versuche verbessert und die Variabilität der Versuche vergrößert. Für die Verlagerung des Schlittens und des weiteren Schlittens ist mindestens eine weitere Antriebseinrichtung vorhanden, die auf dem Arm mitrotiert.

Gemäß einer Ausführungsart ist die Führung entlang desselben Armes wie die weitere Führung erstreckt. Gemäß einer weiteren Ausführungsart erstreckt sich die Führung an der Oberseite des Armes und die weitere Führung an der Unterseite desselben Armes. Diese Ausführungsarten kommen mit einem einzigen Arm aus, der an dem einen Ende mit dem Drehlager verbunden ist. Gemäß einer weiteren Ausführungsart ist auf der anderen Seite des Armes ein Gegengewicht angeordnet, welches das Gewicht des Armes sowie des Schlittens und des weiteren Schlitten kompensiert. Durch die Anordnung auf einem Arm wird die Wirkung der Fliehkraft des einen Schlittens durch die Wirkung der Fliehkraft auf den anderen Schlitten zum Teil kompensiert. Daher kann ein Antriebsmotor mit vergleichsweise geringer Leistung verwendet werden.

Gemäß einer anderen Ausführungsart weist das Versuchsgerät zwei Arme auf, die sich vom Drehlager aus in verschiedene Richtungen erstrecken. Die Führung erstreckt sich entlang des einen Armes und die weitere Führung entlang des anderen Armes. Bei dieser Ausführungsart wird das Gewicht des Armes und des Schlittens durch das Gewicht des weiteren Armes und des weiteren Schlittens kompensiert.

Gemäß einer weiteren Ausführungsart weist die Führung mindestens eine erste Führungsstange auf, die an den beiden Enden am Arm gehalten ist, und weist der Schlitten mindestens eine erste Führungsbuchse auf, die an der ersten Führungsstange geführt ist. Hierdurch wird eine besonders einfache und präzise Führung des Schlittens erreicht. Gemäß einer weiteren Ausführungsart ist die Führung an der Oberseite des Arms angeordnet.

Gemäß einer weiteren Ausführungsart umfasst die weitere Führung mindestens eine weitere Führungsstange, die an den beiden Enden am Arm gehalten ist, und weist der weitere Schlitten mindestens eine weitere Führungsbuchse auf, die an der zweiten weiteren Führungsstange geführt ist. Hierdurch wird eine einfache und präzise Führung des weiteren Schlittens erreicht. Gemäß einer weiteren Ausführungsart ist die weitere Führung an der Unterseite des Arms angeordnet.

Gemäß einer weiteren Ausführungsart ist das Pendel ein Fadenpendel, wobei das obere Ende des Fadens am Querbalken befestigt ist und das untere Ende des Fadens an einem Pendelgewicht befestigt ist. Gemäß einer weiteren Ausführungsart ist das Pendelgewicht eine Kugel.

Gemäß einer weiteren Ausführungsart ist das untere Ende des Pendels in einer nach oben offenen Einfassung auf dem Schlitten angeordnet, die in einer zur Drehachse weisenden Seitenwand einen senkrecht zur Längsachse des Arms erstreckten Schlitz aufweist, durch den der Kompensationsfaden hindurch erstreckt ist. Durch die Einfassung wird eine Beeinflussung des Pendels durch die Luftströmung beim Rotieren des Armes vermindert oder unterbunden.

Gemäß einer weiteren Ausführungsart wird der Kompensationsfaden über eine Umlenkung, vorzugsweise eine Umlenkrollen aufweisende Umlenkung, in der Nähe der Drehachse umgelenkt und zu dem weiteren Schlitten geführt, an dem das andere Ende des Kompensationsfadens befestigt ist. Hierdurch wird eine Verlagerung des weiteren Schlittens im Wesentlichen über die gesamte Länge des Arms und eine große Variabilität der Untersuchungen ermöglicht.

Gemäß einer weiteren Ausführungsart trägt der Querbalken oder der vertikale Tragbalken eine Lichtquelle, vorzugsweise eine LED-Lichtquelle, zur Beleuchtung des Pendels. Hierdurch wird die Messung der Auslenkung des Pendels verbessert.

Gemäß einer weiteren Ausführungsart weist die weitere Antriebseinrichtung einen Antriebsmotor auf, der über ein Getriebe mit dem Schlitten und dem weiteren Schlitten gekoppelt ist. Durch das Antreiben des Schlittens und des weiteren Schlittens mit demselben Antriebsmotor werden die rotierenden Massen gering gehalten und eine synchrone Verlagerung von Schlitten und weiterem Schlitten gewährleistet. Das Getriebe ermöglicht eine Verlagerung des Schlittens unter der Wirkung der Zentrifugalkräfte mit einem Antriebsmotor mit verhältnismäßig geringem Drehmoment.

Gemäß einer weiteren Ausführungsart weist die Antriebseinrichtung ein Riemengetriebe, vorzugsweise Zahnriemengetriebe, auf, das zwei Riemenscheiben hat, die in radialer Richtung des Armes voneinander beanstandet am Arm gelagert sind, wobei das eine der beiden Riementrums des Riemengetriebes mit dem Schlitten und das andere der beiden Riementrums mit dem weiteren Schlitten verbunden ist und eine der beiden Riemenscheiben mit dem Antriebsmotor gekoppelt ist. Hierdurch wird mit geringem Aufwand eine präzise synchrone Verlagerung der Schlitten über die gesamte Länge des Arms ermöglicht. Gemäß einer weiteren Ausführungsart ist eine Riemenscheibe über das Zahnradgetriebe mit dem Antriebsmotor gekoppelt.

Gemäß einer weiteren Ausführungsart umfasst der Schlitten oder der Tragarm eine Elektronik mit einem Controller, die über eine Messwerterfassung mit der Kamera und/oder über eine LED-Steuerung mit der LED verbunden ist. Hierdurch wird eine genaue und einfache Messwerterfassung ermöglicht.

Gemäß einer weiteren Ausführungsart ist die Elektronik über eine Kabelkette mit einer drehfest mit dem Arm verbundenen Signalübertragungseinrichtung verbunden, die über eine lagefeste Signalübertragungseinrichtung mit einem PC verbunden ist. Hierdurch wird eine Übertragung der Messsignale und/oder der Spannung vom verlagerbaren Schlitten auf den Arm und vom rotierenden Arm auf einen PC in einem nicht rotierenden Teil des Versuchsgerätes oder außerhalb des Versuchsgerätes angeordneten PC erreicht.

Gemäß einer weiteren Ausführungsart umfasst ein Versuchsgerät zur Durchführung von Versuchen zum Drehimpuls
- einen Rotor mit einem Unterteil und einem Oberteil, die um eine vertikale Achse drehbar sind,
- zwei Hebel, die um zwei symmetrisch bezüglich der vertikalen Achse angeordnete und fest mit dem Oberteil verbundene Schwenklager mit horizontaler Schwenkachse schwenkbar sind und jeweils in einem Abstand von der Schwenkachse mit einer Masse verbunden sind,
- eine Antriebseinrichtung, die mit dem Unterteil gekoppelt ist, um das Unterteil um die vertikale Achse zu drehen,
- eine zwischen dem Unterteil und dem Oberteil angeordnete Kupplung, die im eingekuppelten Zustand das Unterteil mit dem Oberteil drehfest miteinander verbindet und im ausgekuppelten Zustand ein Verdrehen des Oberteils bezüglich des Unterteils zulässt, und
- eine mit den beiden Hebeln gekoppelte weitere Antriebseinrichtung, mittels der die beiden Hebel synchron in entgegengesetzte Richtungen um die beiden Schwenkachsen schwenkbar sind.

Bei diesem Versuchsgerät sind zwei Hebel über Schwenklager mit horizontalen Schwenkachsen an einem Oberteil eines Rotors gelagert. Die Hebel sind jeweils in einem Abstand von der Schwenkachse mit einer Masse verbunden. Ein Unterteil des Rotors ist um dieselbe vertikale Achse wie das Oberteil drehbar. Eine Antriebseinrichtung ist mit dem Unterteil gekoppelt, um das Unterteil zu drehen und das über eine Kupplung drehfest mit dem Unterteil verbundene Oberteil mitzudrehen. Wenn eine vorher gewählte Endgeschwindigkeit erreicht ist, wird das Oberteil über die Kupplung vom Unterteil entkoppelt. Das Unterteil wird bis zum Stillstand gebremst und das Oberteil rotiert weiter. Über die weitere Antriebseinrichtung und die Hebel wird anschließend der Rotationsradius der Massen verringert oder vergrößert. Nach dem Drehimpulserhaltungssatz wird hierdurch die Drehung des Oberteils erhöht oder verringert. Dieser Effekt kann visuell beobachtet und/oder gemessen werden.

Gemäß einer weiteren Ausführungsart sind die beiden Hebel zweiarmige Hebel, die jeweils in einem spitzen Winkel zueinander ausgerichtete Hebelarme aufweisen, wobei der jeweils näher an der vertikalen Achse angeordnete Hebelarm mit der zweiten Antriebseinrichtung gekoppelt ist. Dies begünstigt eine kompakte Bauweise und eine günstige Kraftübertragung von der weiteren Antriebseinrichtung auf die beiden Hebel.

Gemäß einer weiteren Ausführungsart sind die näher an der vertikalen Achse angeordneten Hebelarme über weitere Schwenklager mit horizontalen Schwenkachsen mit entgegengesetzten Enden einer Traverse schwenkbar verbunden, an der ein Antriebsmotor mit einer vertikalen Motorwelle gehalten ist, die über eine Spindelmutter mit einer vertikalen Gewindespindel gekoppelt ist, die sich mit ihrem unteren Ende an der Oberseite des Oberteils abstützt, sodass durch Drehen der Motorwelle die Gewindespindel bezüglich des Antriebsmotors und die Traverse bezüglich des Oberteils verlagerbar ist und die Hebel schwenkbar sind. Hierdurch können die Massen mit einem Antriebsmotor verhältnismäßig geringem Drehmoment entgegen der Wirkung der Zentrifugalkraft verstellt werden.

Gemäß einer weiteren Ausführungsart sind die Hebel mittels der Schwenklager an den Enden von Gelenksstäben gelagert, die mit den anderen Enden über weitere Schwenklager mit horizontaler Schwenkachse an Lagersockeln schwenkbar gelagert sind, die fest mit dem Oberteil verbunden sind. Durch Schwenken der Gelenksstäbe wird eine radiale Verlagerung der Schwenklager bezüglich der vertikalen Achse beim Schwenken der Hebel kompensiert.

Gemäß einer weiteren Ausführungsart ist die Kupplung eine Magnetkupplung, die ein drehfest mit dem Unterteil verbundenes Kupplungsteil und ein drehfest mit dem Oberteil verbundenes weiteres Kupplungsteil aufweist. Gemäß einer weiteren Ausführungsart ist die Magnetkupplung eine Elektromagnetkupplung, die elektrisch geschaltet werden kann. Über die Elektromagnetkupplung ist es möglich, die Kupplung aus der Ferne auszukuppeln bzw. einzelkuppeln.

Gemäß einer weiteren Ausführungsart ist die Gewindespindel am oberen Ende drehfest mit einem Drehknopf verbunden, mit dem eine Ausgangsstellung der Hebelarme einstellbar ist.

Gemäß einer weiteren Ausführungsart sind die Massen Kugelkörper.

Gemäß einer weiteren Ausführungsart trägt die Gewindespindel oberhalb des Antriebsmotors eine Kalibrierhülse, gegen die die Hebel mit den damit verbundenen Massen schwenkbar sind, um die Vorrichtung zu kalibrieren. Damit werden Fertigungstoleranzen ausgeglichen und eine hohe Genauigkeit bei der Erfassung des Rotationsradius der Kugeln erreicht. Gemäß einer weiteren Ausführungsart ist die Kalibrierhülse abnehmbar.

Gemäß einer weiteren Ausführungsart ist der Drehknopf zum Aufsetzen und Abnehmen der Kalibrierhülse lösbar an der Gewindespindel befestigt.

Nach einer weiteren Ausführungsart weisen die Traverse und das Oberteil einen einstellbaren Endlagenschalter oder Näherungsschalter auf. Der Endlagenschalter umfasst beispielsweise einen Reed-Kontakt und einen Permanentmagneten, wobei der Reed-Kontakt am Unterteil und der Permanentmagnet am Oberteil angeordnet ist oder umgekehrt. Mittels des Endlagenschalters kann festgestellt werden, dass die Hebel eine bestimmte Ausgangsposition für die Durchführung eines Versuches erreicht haben. Für die Kalibrierung ist der Endlagenschalter einstellbar. Alternativ ist der Endlagenschalter als induktiver, kapazitiver oder optischer Endlagenschalter ausgebildet.

Eine weitere Ausführungsart weist einen Drehwinkelgeber auf, der am Oberteil oder Unterteil angeordnet ist und die relative Drehzahl von Oberteil und Unterteil erfasst. Hierdurch kann die Veränderung der Drehzahl des Oberteils durch Verlagerung der Massen in radialer Richtung bezüglich der Drehachse ermittelt werden.

Das Versuchsgerät umfasst ein Basismodul mit den folgenden Merkmalen:
- ein Gehäuse,
- einen Drehteller mit vertikaler Drehachse an der Oberseite des Gehäuses zum Aufsetzen eines Aufsetztellers eines erfindungsgemäßen Aufsetzmoduls mit einer Versuchsanordnung für Versuche zur Rotationsdynamik,
- ein Drehlager im Gehäuse, an dem der Drehteller um seine vertikale Achse drehbar gelagert ist,
- eine Kupplungseinrichtung an dem Drehteller zum Kuppeln mit einer weiteren Kupplungseinrichtung am Aufsetzteller des erfindungsgemäßen Aufsetzmoduls, um den Drehteller drehfest mit dem Aufsetzteller zu verbinden, und
- einen im Gehäuse angeordneten Antriebsmotor, mit dem der Drehteller gekoppelt ist, um diesen um die Drehachse zu drehen.

Das Versuchsgerät umfasst ein Aufsetzmodul, das eine Versuchsanordnung zur Durchführung von Versuchen zur Rotationsdynamik auf einem Aufsetzteller zum Aufsetzen auf einen Drehteller eines erfindungsgemäßen Basismoduls und eine weitere Kupplungseinrichtung am Aufsetzteller zum Kuppeln mit einer Kupplungseinrichtung am Drehteller des erfindungsgemäßen Basismoduls aufweist.

Erfindungsgemäß umfasst das Basismodul zur Durchführung unterschiedlicher Versuche zur Rotationsdynamik einen Antriebsmotor und umfasst das Aufsetzmodul eine Versuchsanordnung zur Durchführung von Versuchen zur Rotationsdynamik. Hierdurch kann dasselbe Antriebssystem für Aufsetzmodule mit verschiedenen Versuchsanordnungen verwendet und der apparative Aufwand sowie der Aufwand für Lagerung und Transport verringert werden. Der Drehteller mit der Kupplungseinrichtung und der Aufsetzteller mit der weiteren Kupplungseinrichtung bilden Schnittstellen zum drehfesten Verbinden von Basismodul und Aufsetzmodul, die eine präzise Ausrichtung des Aufsetzmoduls auf das Basismodul und die Übertragung hoher Kräfte zwischen Aufsetzmodul und Basismodul ermöglichen. Hierdurch wird eine leicht herstellbare und wieder lösbare, sichere, Unwuchten vermeidende und die Durchführung unterschiedlicher Versuche zur Rotationsdynamik fördernde Verbindung zwischen Basismodul und Aufsetzmodul erreicht. Insbesondere sind diese Schnittstellen für hohe Fliehkräfte geeignet, die bei Versuchen zur Rotationsdynamik auftreten können. Die Schnittstellen von Basismodul und Aufsetzmodul erleichtern den Versuchsauf- und Abbau und den Austausch verschiedener Aufsetzmodule zur Durchführung verschiedener Versuche. Die Kupplungseinrichtung und/oder die weitere Kupplungseinrichtung können so ausgebildet sein, dass sie eine Schnellwechselvorrichtung bilden, die ein Wechseln des Austauschmoduls mit wenigen Handgriffen ermöglichen.

Gemäß einer Ausführungsart der Erfindung weist die Kupplungseinrichtung von der Oberseite des Drehtellers vorstehende, auf einem Kreis um die Drehachse angeordnete, elastisch schwenkbare kegelförmige Zapfen zum formschlüssigen Aufnehmen zwischen zur Kontur der Zapfen komplementären Konturen am Außenumfang eines zentralen Tellers und am Innenumfang eines konzentrisch zum zentralen Teller angeordneten, vertikal verlagerbaren Rings des Aufsetztellers eines Aufsetzmoduls auf. Gemäß einer weiteren Ausführungsart weist der Aufsetzteller einen zentralen Teller mit einer zu einer kegelförmigen Kontur an der Oberseite des Drehtellers vorstehender Zapfen des Basismoduls komplementären Kontur am Außenumfang und einen konzentrisch zum zentralen Teller angeordneten, vertikal verlagerbaren Ring mit einer zur kegelförmigen Kontur der Zapfen komplementären Kontur am Innenumfang auf. Hierdurch wird eine Schnellwechselvorrichtung für ein schnelles Verbinden des Aufsetzmoduls mit dem Basismodul und ein schnelles Lösen des Aufsetzmoduls vom Basismodul sowie Austauschen des Aufsetzmoduls ermöglicht.

Gemäß einer weiteren Ausführungsart weist der Drehteller des Basismoduls an der Oberseite mindestens eine vorstehende Passfeder zum Einsetzen in mindestens eine zur Passfeder komplementäre Passfedernut an der Unterseite des Aufsetztellers eines Aufsetzmodules und/oder mindestens eine Passfedernut zum Aufnehmen mindestens einer von der Unterseite des Aufsetztellers eines Aufsetzmoduls vorstehenden komplementären Passfeder für eine drehfeste Verbindung zwischen Drehteller und Aufsetzteller auf. Gemäß einer weiteren Ausführungsart weist der Aufsetzteller des Aufsetzmoduls an der Unterseite mindestens eine Passfedernut zur Aufnahme mindestens einer vorstehenden Passfeder an der Oberseite des Drehtellers eines Basismoduls und/oder mindestens eine von der Unterseite des Aufsetztellers vorstehende Passfeder zum Einsetzen in mindestens eine komplementäre Passfedernut an der Oberseite des Drehtellers auf. Hierdurch wird eine einfach herstellbare drehfeste Verbindung zwischen dem Aufsetzteller und dem Drehteller und eine besonders präzise Ausrichtung des Aufsetztellers auf den Drehteller ermöglicht.

Gemäß einer weiteren Ausführungsart weist der Drehteller des Basismoduls an der Oberseite mindestens ein Zentrierelement zum Zentrieren mindestens eines komplementären Zentrierelementes an der Unterseite des Aufsetztellers eines Aufsetzmoduls auf. Gemäß einer weiteren Ausführungsart weist der Aufsetzteller des Aufsetzmoduls an der Unterseite mindestens ein weiteres Zentrierelement zum Zentrieren an mindestens einem komplementären Zentrierelement an der Oberseite des Drehtellers eines Basismoduls auf. Hierdurch wird eine genau Zentrierung des Aufsetztellers am Drehteller ermöglicht, was insbesondere vorteilhaft zur Vermeidung von Unwuchten ist.

Gemäß einer weiteren Ausführungsart umfasst das Zentrierelement eine kreiszylindrische Begrenzung einer umlaufenden Stufe an der Oberseite des Drehtellers des Basismoduls zum Zentrieren an einer weiteren kreiszylindrischen Begrenzung einer Vertiefung an der Unterseite des Aufsetztellers eines Aufsetzmoduls. Gemäß einer weiteren Ausführungsart umfasst das weitere Zentrierelement eine weitere kreiszylindrische Begrenzung einer Vertiefung an der Unterseite des Aufsetztellers zum Zentrieren an einer kreiszylindrischen Begrenzung einer umlaufenden Stufe an der Oberseite des Drehtellers eines Basismoduls. Dies ermöglicht eine genaue Zentrierung des Aufsetztellers am Drehteller.

Gemäß einer weiteren Ausführungsart umfasst das Zentrierelement einen konischen Vorsprung oder eine konische Vertiefung an der Oberseite des Drehtellers zum Zentrieren an einer weiteren konischen Vertiefung oder einem weiteren konischen Vorsprung an der Unterseite des Aufsetztellers. Gemäß einer weiteren Ausführungsart umfasst das weitere Zentrierelement eine konische Vertiefung oder einen konischen Vorsprung an der Unterseite des Aufsetztellers zum Zentrieren an einem konischen Vorsprung oder einer konischen Vertiefung an der Oberseite des Drehtellers. Durch die konische Form wird das Zusammenfügen von Drehteller und Aufsetzteller erleichtert.

Gemäß einer weiteren Ausführungsart ist das Gehäuse des Basismoduls ausgebildet, auf einen horizontalen Untergrund aufgesetzt zu werden, wobei die Drehachse des Drehtellers vertikal ausgerichtet ist. Hierzu weist das Gehäuse eine zum Drehteller parallele Bodenwand oder Füße auf, deren Standfläche parallel zur Bodenwand ausgerichtet ist. Gemäß einer weiteren Ausführungsart ist das Gehäuse des Basismoduls ein Tischgehäuse. Hierbei handelt es sich um ein Gehäuse, das geeignet ist, auf einen Tisch aufgesetzt zu werden, insbesondere auf einen Tisch oder ein Pult in einem Hörsaal oder auf einen Labortisch. Das Tischgehäuse weist entsprechende Abmessungen auf, sodass es auf einen Tisch oder ein Pult aufsetzbar ist, sowie ein Gewicht, sodass es von einer oder zwei Personen getragen werden kann.

Gemäß einer weiteren Ausführungsart umfasst das Basismodul einen im Gehäuse angeordneten Schleifringübertrager, der ein lagefest im Gehäuse angeordnetes, Anschlüsse für eine Stromversorgung und/oder Signale aufweisendes Übertragerteil und ein drehfest mit dem Drehteller verbundenes, Anschlüsse für eine Stromversorgung und/oder Signale aufweisendes weiteres Übertragerteil aufweist, die mit mindestens einem Steckverbinder an der Oberseite des Drehtellers verbunden sind, wobei der mindestens eine Steckverbinder mit mindestens einem weiteren Steckverbinder an der Unterseite des Aufsetztellers eines Aufsetzmoduls verbindbar ist, um einen weiteren Antriebsmotor oder einen anderen elektrischen Verbraucher auf dem Aufsetzmodul mit Strom zu versorgen und/oder eine Versuchsanordnung auf dem Aufsetzmodul zu steuern und/oder Messsignale von einer Versuchsanordnung auf dem Aufsetzmodul zu übertragen. Gemäß einer weiteren Ausführungsart weist der Aufsetzteller des Aufsetzmoduls an der Unterseite einen weiteren Steckverbinder mit Anschlüssen für die Stromversorgung eines Antriebsmotors oder eines anderen elektrischen Verbrauchers und/oder Steuerung einer Versuchsanordnung und/oder Übertragung von Messsignalen einer Messeinrichtung einer Versuchsanordnung auf dem Aufsetzmodul auf, wobei der mindestens eine weitere Steckverbinder mit mindestens einem Steckverbinder an der Oberseite des Drehtellers verbindbar ist. Hierdurch wird ermöglicht, Verbraucher auf dem Aufsetzmodul mithilfe einer Stromversorgung des Basismoduls mit elektrischem Strom zu versorgen und/oder eine Versuchsanordnung auf dem Aufsetzmodul mithilfe einer Steuerungseinrichtung auf dem Basismodul zu steuern und/oder Messsignale von einer Versuchsanordnung auf dem Aufsetzmodul auf eine Datenverarbeitungseinrichtung in dem Basismodul oder außerhalb des Basismoduls zu übertragen. Hierdurch wird die Bedienung vereinfacht und die Durchführung und Auswertung der Versuche erleichtert. Ferner können die Versuchsergebnisse einer größeren Anzahl lernender Schüler oder Studenten einfacher zugänglich gemacht werden.

Gemäß einer weiteren Ausführungsart weist mindestens ein Steckverbinder Federkontaktpins zur Verbindung mit mindestens einem als Buchse ausgebildeten weiteren Steckverbinder auf und/oder ist mindestens ein Steckverbinder eine Buchse zur Verbindung mit mindestens einem Federkontaktpins aufweisenden weiteren Steckverbinder. Gemäß einer weiteren Ausführungsart ist mindestens ein weiterer Steckverbinder eine Buchse zur Verbindung mit mindestens einem Federkontaktpins aufweisenden Steckverbinder und/oder weist mindestens ein weiterer Steckverbinder Federkontaktpins zur Verbindung mit einem als Buchse ausgebildeten Steckverbinder auf. Hierdurch wird eine besonders einfache und sichere elektrische Verbindung der Spannungsversorgung und/oder Steuerung und/oder Messsignalübertragung zwischen Basismodul und Aufsetzmodul ermöglicht.

Gemäß einer weiteren Ausführungsart ist im Gehäuse eine Stromversorgung angeordnet, die mit dem lagefesten Übertragerteil des Schleifringübertragers verbunden ist. Hierdurch wird eine Versorgung des Aufsetzmoduls mit Strom aus der Stromversorgung des Basismoduls ermöglicht. Gemäß einer weiteren Ausführungsart ist im Gehäuse ein PC angeordnet, der mit dem Antriebsmotor und/oder mit dem lagefesten Übertragerteil des Schleifringübertragers verbunden ist. Hiermit wird eine Steuerung bzw. Regelung der Rotation des Drehtellers und/oder eine Steuerung eines elektrischen Verbrauchers und/oder Auswertung von Messsignalen von Signalaufnehmern der Versuchsanordnung mittels des PCs im Basismodul ermöglicht.

Gemäß einer weiteren Ausführungsart ist im Gehäuse eine lagefeste drahtlose Signalübertragungseinrichtung (z.B. WLAN oder Bluetooth) angeordnet und am Drehteller eine weitere drahtlose Signalübertragungseinrichtung angeordnet, wobei die lagefeste Signalübertragungseinrichtung mit dem im Gehäuse angeordneten PC verbunden oder mit einem externen PC verbindbar ist und die auf dem Drehteller angeordnete weitere Signalübertragungseinrichtung (z.B. WLAN oder Bluetooth) mit dem mindestens einem Steckverbinder auf dem Drehteller verbunden ist, um Signale vom PC an eine Versuchsanordnung auf dem Aufsetzmodul oder Signale von einer Versuchsanordnung auf einem Aufsetzmodul an den PC zu übertragen. Hierdurch wird eine sichere und kostengünstige Übertragung von Signalen zwischen Versuchsanordnung und im Gehäuse angeordnetem oder externen PC ermöglicht.

Gemäß einer weiteren Ausführungsart ist der Antriebsmotor ein Schrittmotor. Dies ermöglicht eine besonders genaue Steuerung der Drehzahl sowie der Beschleunigung und Verzögerung des Drehtellers.

Gemäß einer weiteren Ausführungsart ist der Antriebsmotor über ein Getriebe, vorzugsweise über ein Riemengetriebe, mit dem Drehteller gekoppelt.

Gemäß einer weiteren Ausführungsart ist der Antriebsmotor an einem Chassis gehalten, das im Gehäuse auf Entkopplungselementen, vorzugsweise Gummipuffern oder Federn, gelagert ist. Hierdurch kann eine Störung von Untersuchungen durch Schwingungen herabgesetzt werden.

Gemäß einer weiteren Ausführungsart ist im Gehäuse ein Sensor angeordnet, der die Drehung des Drehtellers erfasst und der mit dem PC verbunden ist, um den elektrischen Antriebsmotor zu steuern. Hierdurch wird eine besonders genaue Einstellung bzw. Regelung der Drehzahl sowie der Beschleunigung und Verzögerung des Drehtellers ermöglicht.

Gemäß einer weiteren Ausführungsart ist auf dem Drehteller ein Beschleunigungssensor angeordnet, der mit dem Schleifringübertrager und/oder der weiteren elektrischen Signalübertragungseinrichtung verbunden ist, um die Drehung des Drehtellers und/oder eine Unwucht zu erfassen.

Gemäß einer weiteren Ausführungsart weist das Gehäuse eine aufklappbare Haube auf. Die Haube kann vor herumfliegenden Teilen schützen, falls Fehler bei der Versuchsdurchführung auftreten.

Gemäß einer weiteren Ausführungsart umfasst das Basismodul einen Rastmechanismus zum Verrasten der geschlossenen Haube mit dem Gehäuse und/oder eine automatische Verriegelung zum Verriegeln der geschlossenen Haube und dem Gehäuse bei laufendem Drehteller und/oder mindestens einem Dämpfungselement zwischen Haube und Gehäuse zum Dämpfen der Schließbewegung der Haube. Hierdurch werden Gefahren durch herumfliegende Teile weiter herabgesetzt.

Gemäß einer weiteren Ausführungsart umfasst das Aufsetzmodul mindestens einen weiteren elektrischen Antriebsmotor zum Verlagern mindestens einer Masse relativ zum Aufsetzteller. Dies ermöglicht die Durchführung von Untersuchungen mit in einem rotierenden System verlagerten Massen. Gemäß einer weiteren Ausführungsart ist der weitere elektrische Antriebsmotor mit dem weiteren elektrischen Anschluss des weiteren Steckverbinders verbunden. Hierdurch wird eine Stromversorgung und/oder eine Steuerung des weiteren elektrischen Antriebsmotors über das Basismodul ermöglicht. Gemäß einer anderen Ausführungsart umfasst das Aufsetzmodul eine eigene Stromversorgung (z. B. Batterie oder Akku), die mit dem weiteren elektrischen Antriebsmotor verbunden ist.

Gemäß einer weiteren Ausführungsart ist der weitere elektrische Antriebsmotor ein weiterer Schrittmotor.

Gemäß einer weiteren Ausführungsart umfasst das Aufsetzmodul mindestens eine Elektronik mit einem Controller, die mit mindestens einer Messwerterfassung und/oder dem weiteren elektrischen Antriebsmotor und dem weiteren Steckverbinder verbunden ist.

Gemäß einer weiteren Ausführungsart umfasst das Aufsetzmodul eine Versuchsanordnung für Versuche zur Zentrifugalkraft, eine Versuchsanordnung für Versuche zur Corioliskraft oder eine Versuchsanordnung für Versuche zum Drehimpuls.

Die Erfindung wird nachfolgend anhand der anliegenden Zeichnungen von Ausführungsbeispielen näher erläutert. In den Zeichnungen zeigen:
- Fig. 1: ein Basismodul in einer Perspektivansicht schräg von oben und von der Seite;
- Fig. 2: das Basismodul teilweise bestückt mit einem Antriebssystem bei abgenommenem Deckel in einer Perspektivansicht schräg von oben;
- Fig. 3: Drehteller des Basismoduls in einer Perspektivansicht schräg von oben;
- Fig. 4: das Basismodul mit Aufsetzteller eines Aufsetzmoduls in einer Perspektivansicht schräg von oben;
- Fig. 5a, b: das Basismodul mit Aufsetzteller teilweise geschnitten in einer Perspektivansicht schräg von oben (Fig. 5a) und vergrößertes Detail B von Fig. 5a (Fig. 5b);
- Fig. 6: der Aufsetzteller in einer Perspektivansicht schräg von unten;
- Fig. 7: Drehteller mit aufgesetztem Aufsetzteller im verriegelten Zustand (Fig. 7a) und im entriegelten Zustand (Fig. 7b) und Drehteller mit abgenommenem Aufsetzteller (Fig. 7c) jeweils im Vertikalschnitt;
- Fig. 8: ein Aufsetzmodul des Versuchsgerätes zur Durchführung von Versuchen zur Zentrifugalkraft in einer Perspektivansicht schräg von oben und von der Seite;
- Fig. 9: dasselbe Aufsetzmodul längsgeschnitten in einer Perspektivansicht schräg von oben;
- Fig. 10: Gewichtsanordnung desselben Aufsetzmoduls vertikal geschnitten in einer vergrößerten Teilansicht schräg von oben;
- Fig. 11: Aufsetzmodul eines Versuchsgerätes zur Durchführung von Versuchen zur Corioliskraft in einer Perspektivansicht schräg von oben;
- Fig. 12a, b: dasselbe Aufsetzmodul teilweise ausgeschnitten in einer Perspektivansicht schräg von oben (Fig. 12a) und von der entgegengesetzten Seite (Fig. 12b);
- Fig. 13: Pendelanordnung desselben Aufsetzmoduls in einer vergrößerten Perspektivansicht schräg von oben;
- Fig. 14: Pendelanordnung desselben Aufsetzgerätes vertikal geschnitten in einer vergrößerten Perspektivansicht;
- Fig. 15: Aufsetzmodul eines Versuchsgerätes zur Durchführung von Versuchen zum Drehimpuls in einer Perspektivansicht schräg von oben;
- Fig. 16a, b: dasselbe Aufsetzmodul teilweise ausgeschnitten in einer Perspektivansicht schräg von oben (Fig. 16a) und vergrößertes Detail von Fig. 16a (Fig. 16b);
- Fig. 17a-c: Aufsetzmodule mit mitdrehender Stelleinheit, Spindelantrieb und zwei Armen (Fig. 17a), Riemenantrieb und zwei Armen (Fig. 17b) und Riemenantrieb und einem Arm (Fig. 17c), jeweils in einer Perspektivansicht schräg von oben.

In der vorliegenden Anmeldung beziehen sich die Angaben "oben" und "unten" sowie davon abgeleitete Begriffe wie "darüber" und "darunter" sowie "oberhalb" und "unterhalb" auf eine Anordnung des Basismoduls, wobei die Drehachse des Drehtellers vertikal ausgerichtet ist und sich der Drehteller an der Oberseite des Gehäuses befindet. Ferner beziehen sich diese Begriffe auf einer Anordnung des Aufsetzmoduls, bei der der Aufsatzteller eine vertikal ausgerichtete Mittelachse hat und die Versuchsanordnung an der Oberseite des Drehtellers angeordnet ist.

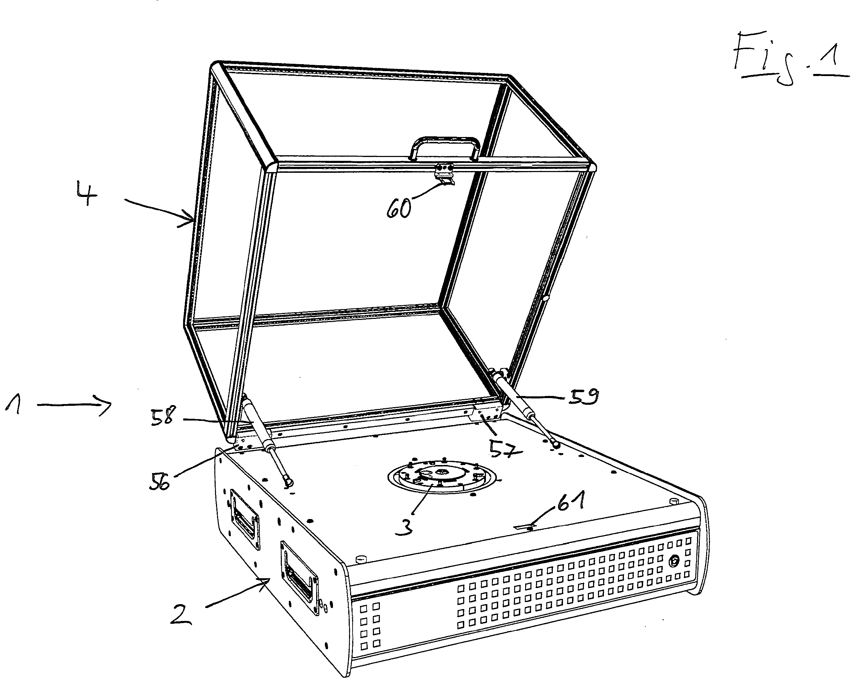

Gemäß Fig. 1 umfasst ein Basismodul 1 ein im Wesentlichen quaderförmiges Gehäuse 2 mit einem mittig an der Oberseite angeordneten Drehteller 3 und einer kastenförmigen, transparenten Haube 4 zum Abdecken der Oberseite des Gehäuses 2.

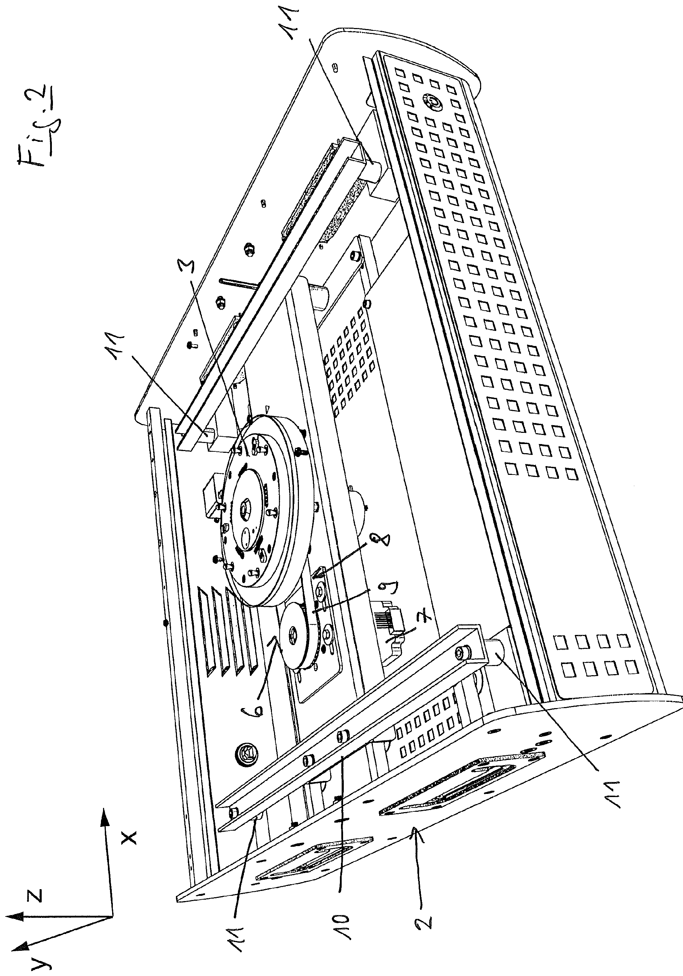

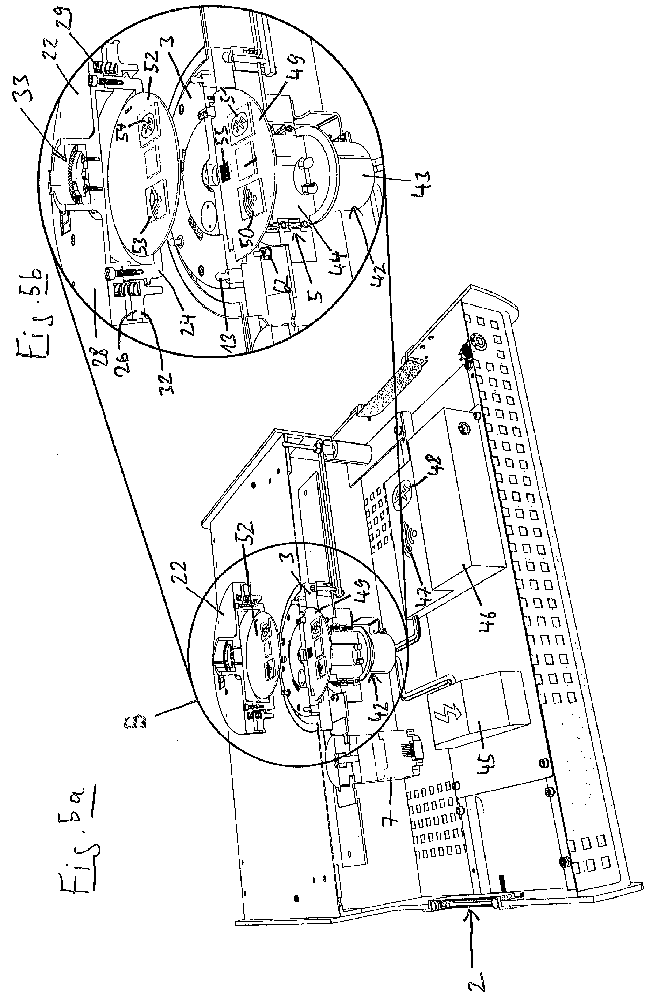

Gemäß Fig. 2 und 5 ist der Drehteller 3 im Gehäuse 2 an einem Drehlager 5 um eine vertikale Mittelachse drehbar gelagert. Im Gehäuse 2 befindet sich eine Antriebseinrichtung 6 mit einem Antriebsmotor 7, der über ein Getriebe 8 mit dem Drehteller 3 gekoppelt ist. Das Getriebe 8 ist als Riemengetriebe mit einem Antriebsriemen 9 ausgebildet, der über eine drehfest mit der Welle des Antriebsmotors 7 verbundene Riemenscheibe und eine drehfest mit dem Drehteller 3 verbundene Riemenscheibe geführt ist.

Der Antriebsmotor 7 und das Drehlager 5 sind an einem Chassis 10 gehalten, das im Gehäuse 2 auf Gummipuffern 11 gelagert ist.

Die benachbarten Gummipuffer 11 haben in Richtung parallel zur Vorder- und Rückseite (X-Richtung) und in Richtung parallel zur linken und rechten Seite des Gehäuses 2 (Y-Richtung) denselben Abstand voneinander (Fig. 2). Dies ist vorteilhaft für die Erfassung von Unwuchten durch Messung der Beschleunigung in X- und Y-Richtung.

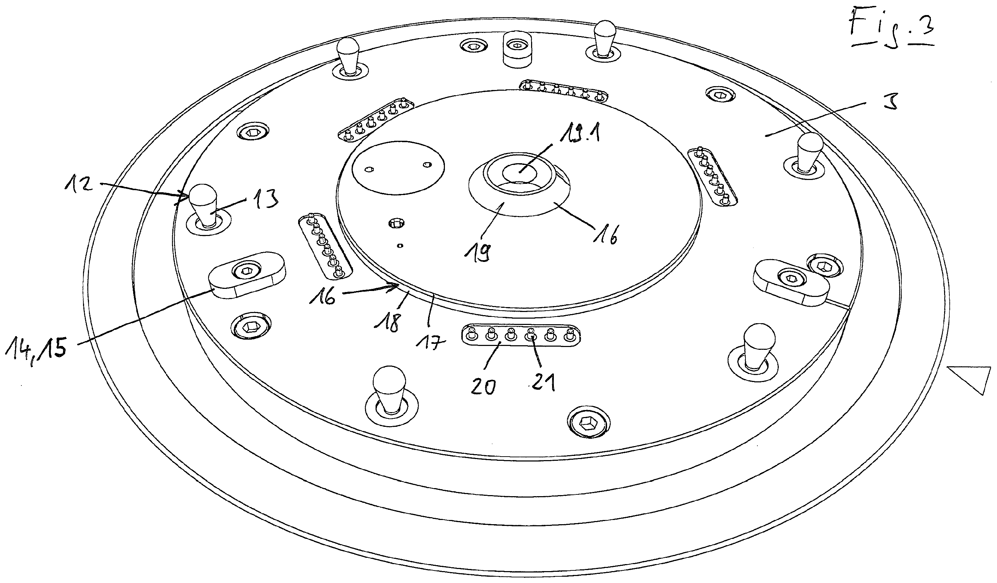

Der Drehteller 3 weist eine Kupplungseinrichtung 12 auf. Diese umfasst gemäß Fig. 3 von der Oberseite des Drehtellers 3 auf einem Kreis um die Drehachse nach oben vorstehende, elastisch schwenkbare kegelförmige Zapfen 13
Ferner weist der Drehteller 3 an der Oberseite eine Einrichtung zum drehfesten Verbinden 14 auf. Diese umfasst drei nach oben vorstehende, mit ihrer Längsachse radial ausgerichtete, ovale Passfedern 15, die in Umfangsrichtung gleichmäßig verteilt sind.

Ferner weist der Drehteller 3 an der Oberseite ein Zentrierelemente 16 in Form einer umlaufenden Stufe 17 mit kreiszylindrischer Begrenzung 18 und eines zentral vorstehenden konischen Zentrierelementes 19 auf.

In einer zylindrischen Aussparung im konischen Zentrierelement ist eine Libelle 19.1 angeordnet, um das horizontale Ausrichten des Gehäuses 2 zu erleichtern.

An der Oberseite des Drehtellers 3 sind mehrere längliche Steckverbinder 20 angeordnet, die tangential zur Stufe 17 angeordnet sind und jeweils mehrere Federkontaktpins 21 aufweisen.

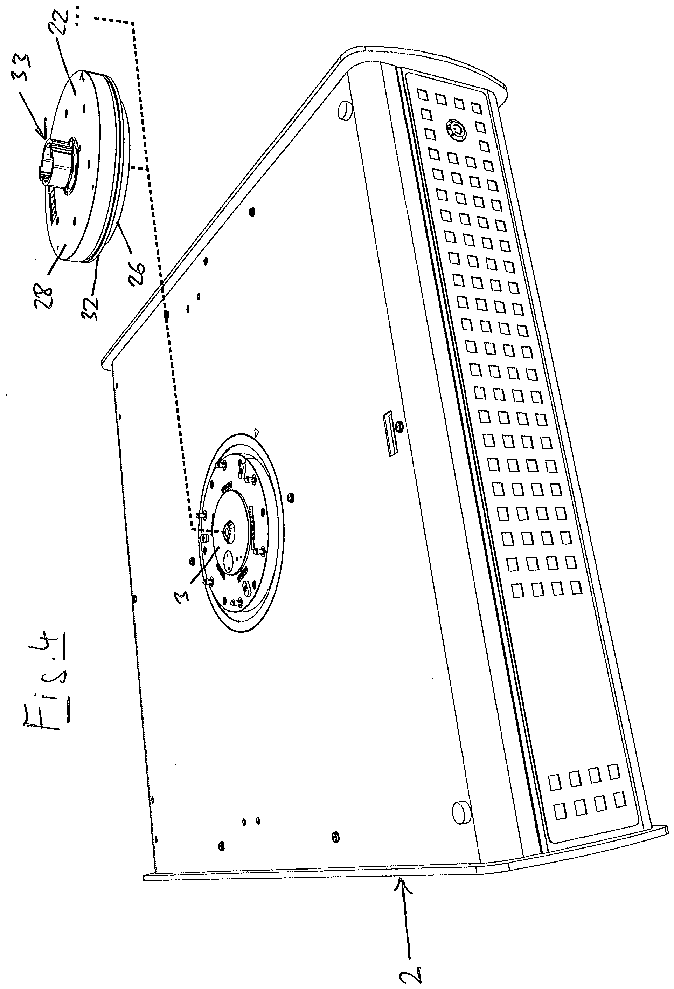

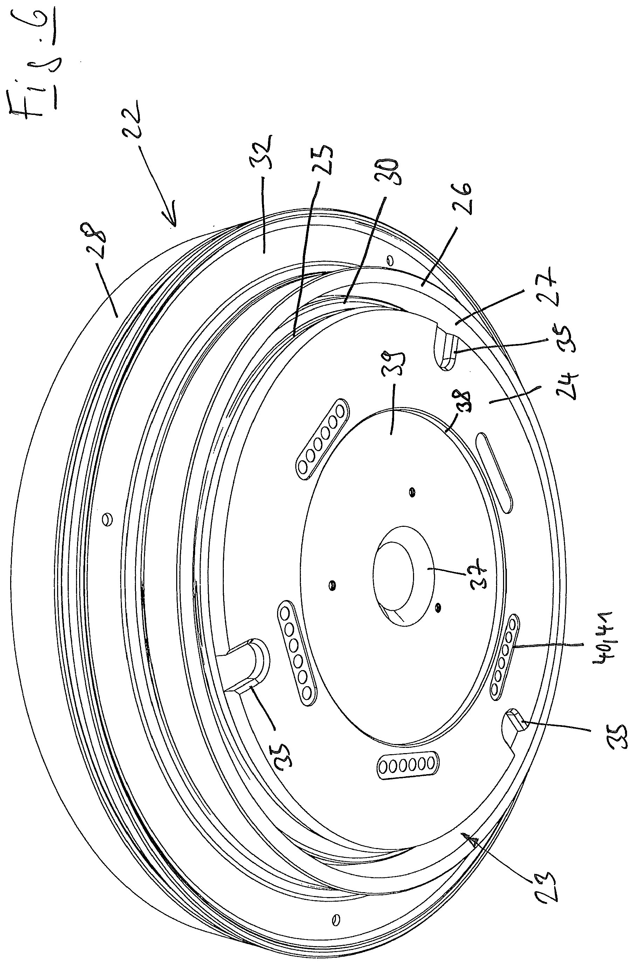

Gemäß Fig. 4 bis 7 weist ein Aufsetzteller 22 eine weitere Kupplungseinrichtung 23 auf. Diese umfasst einen zentralen Teller 24 mit einer zur kegelförmigen Kontur der Zapfen 13 auf dem Drehteller 3 komplementären nutenartigen Kontur 25 am Außenumfang und einen konzentrisch zum zentralen Teller 24 angeordneten, vertikal verlagerbaren Ring 26 mit einer konischen Kontur 27 am Innenumfang. Der zentrale Teller 24 ist an einem oberen Teller 28 mittels Schrauben befestigt und der Ring 26 ist mit seinem Innenumfang am Außenumfang des zentralen Tellers 24 in vertikaler Richtung geführt. Zwischen dem oberen Teller 28 und dem Ring 26 sind mehrere Schraubenfedern 29 angeordnet, die den Ring 26 nach unten drücken.

Der zentrale Teller 24 weist am Außenumfang oberhalb der Kontur 25 einen umlaufenden Flansch 30 auf. Der Ring 26 hat an der Unterseite oberhalb der Kontur 27 einen Absatz 31, mit dem er von den Schraubenfedern 29 gegen den Flansch 30 gedrückt werden kann. Der Ring 26 weist am Außenumfang einen umlaufenden weiteren Flansch 32 auf.

Der Aufsetzteller 22 weist an der Oberseite Einrichtungen zum Befestigen 33 einer Versuchsanordnung auf.

Der Aufsetzteller 22 weist eine weitere Einrichtung zum drehfesten Verbinden 34 auf. Dabei handelt es sich um drei Passfedernuten 35, die gleichmäßig um die Mittelachse des Aufsetztellers 22 verteilt an der Unterseite des zentralen Tellers 24 angeordnet sind. Die Passfedernuten 35 sind ausgebildet, die Passfedern 15 aufzunehmen.

Ferner weist der Aufsetzteller 22 weitere Zentrierelemente 36 auf. Diese umfassen eine konische Vertiefung 37, die an der Unterseite des zentralen Tellers 24 angeordnet ist und die zur Aufnahme des konischen Zentrierelementes 19 an der Oberseite des Drehtellers 3 ausgebildet ist.

Ferner umfassen die weiteren Zentrierelemente 36 eine umlaufende kreiszylindrische Begrenzung 38 einer Vertiefung 39 an der Unterseite des zentralen Tellers zur Aufnahme der umlaufenden Stufe 17 des Drehtellers 3.

Der Aufsetzteller 22 umfasst weitere Steckverbinder 40, die als längliche Buchsen 41 zur Verbindung mit den Federkontaktpins 21 ausgebildet sind. Die Buchsen 41 sind tangential zur kreiszylindrischen Begrenzung 38 angeordnet.

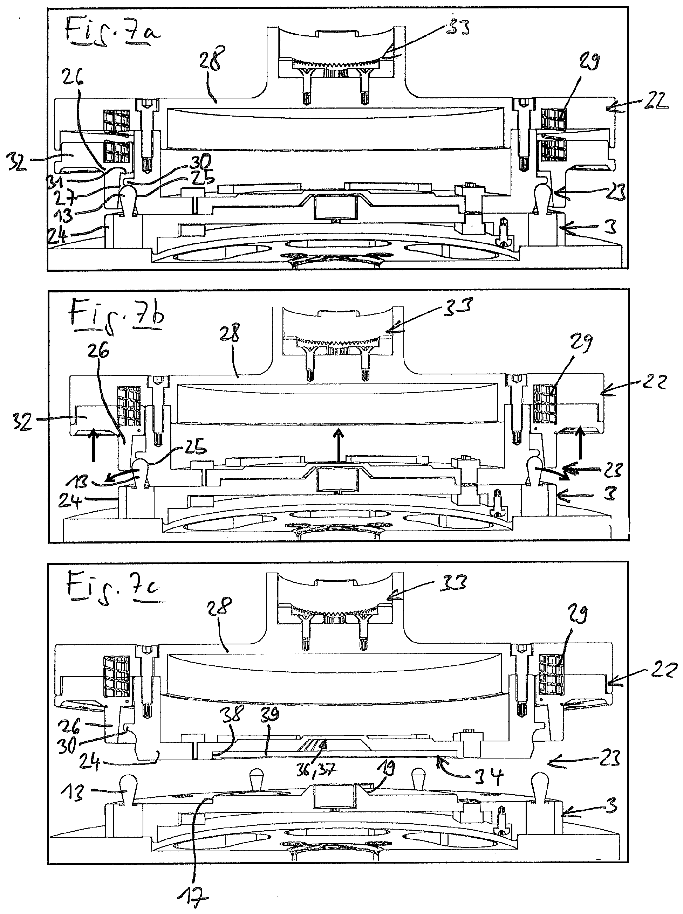

Gemäß Fig. 7a ist der Aufsetzteller 22 drehfest mit dem Drehteller 3 verbunden. Hierbei ist der Aufsetzteller 22 mit dem zentralen Teller 24 auf die Oberseite des Drehtellers 3 aufgesetzt, sodass die umlaufende Stufe 17 an der kreiszylindrischen Begrenzung 38 und das vorspringende konische Zentrierelement 19 an der konischen Vertiefung 37 anliegt. Ferner greifen die Passfedern 15 in die Passfedernuten 35 ein. Zudem liegen die Zapfen 13 innen an der Kontur 25 des zentralen Tellers 24 und außen an der Kontur 27 an und sind zwischen diesen Konturen 25, 27 gefangen. Der Ring 26 und der zentrale Teller 24 sichern den Aufsetzteller 22 auf dem Drehteller.

Gemäß Fig. 7b wird zum Lösen des Aufsetztellers 22 von dem Drehteller 3 der Ring 26 entgegen der Wirkung der Schraubenfedern 29 nach oben gedrückt. Der Anwender kann mit den beiden Händen den Aufsetzteller 22 am Außenumfang greifen und den weiteren Flansch 32 nach oben drücken, um ohne zusätzliches Werkzeug die Verriegelung von Aufsetzteller 22 und Drehteller 3 zu entriegeln.

Nach der Entriegelung ist gemäß Fig. 7c der Aufsetzteller 22 vom Drehteller 3 abziehbar.

Gemäß Fig. 5 ist unterhalb des Drehtellers 3 ein Schleifringübertrager 42 angeordnet. Dieser weist ein lagefest im Gehäuse 2 angeordnetes, Anschlüsse für eine Stromversorgung und/oder Signale aufweisendes Übertragerteil 43 und ein drehfest mit dem Drehteller 3 verbundenes, weitere Anschlüsse für eine Spannungsversorgung und/oder Signale aufweisendes weiteres Übertragerteil 44 auf. Die Anschlüsse sind mit einer elektrischen Stromversorgung 45 und einem PC 46 verbunden, der drahtlose Signalübertragungseinrichtungen 47 (WLAN) und 48 (Bluetooth) umfasst. Die weiteren Anschlüsse sind mit den Steckverbindern 40 an der Oberseite des Drehtellers 3 elektrisch verbunden.

Im Drehteller 3 ist eine Platine 49 angeordnet, auf der drahtlose Signalübertragungseinrichtungen 50 für WLAN und 51 für Bluetooth angeordnet sind, die mit dem PC 46 im Gehäuse verbunden sind. Der PC 46 dient insbesondere der Steuerung von Versuchen (insbesondere von Antriebseinrichtungen) sowie der Verarbeitung von Messergebnissen (z.B. von Sensoren, Kameras usw.) und der Verarbeitung, Speicherung, Auswertung und Anzeige von Messergebnissen.

Innerhalb des Aufsetztellers 22 ist eine weitere Platine 52 mit drahtlosen Signalübertragungseinrichtungen 53 für WLAN und 54 für Bluetooth angeordnet, die beispielsweise zur Übertragung von Messsignalen und/oder von Steuerungssignalen verwendet werden. Hierfür können die Signalübertragungseinrichtungen 53, 54 mit entsprechenden Messeinrichtungen und/oder Antriebseinrichtungen eines Versuchsmoduls verdrahtet sein, das auf dem Aufsetzteller 22 angeordnet ist. Die drahtlosen Signalübertragungseinrichtungen 47, 48 und/oder 50, 51 können mit den drahtlosen Signalübertragungseinrichtungen 53, 54 kommunizieren.

Auf der Platine 49 ist ein Beschleunigungssensor 55 angeordnet, der über den Schleifringübertrager 42 und/oder die Signalübertragungseinrichtungen 50, 51, 47, 48 mit dem PC 46 verbunden ist.

Die Haube 4 ist über Schwenkgelenke 56, 57 mit dem hinteren oberen Rand des Gehäuses 2 verbunden. Zusätzlich ist sie am Gehäuse über Gasdruckdämpfer 58, 59 abgestützt.

Zudem umfasst das Basismodul 1 eine elektromechanische Verriegelungseinrichtung, welche die Haube 4 in geschlossener Stellung verriegelt, wenn der Drehteller dreht. Hierfür wird ein Bolzen in ein Loch an einer vom vorderen Rand der Haube 4 nach unten vorstehende Lasche 60 geschoben, die in einen Schlitz 61 am vorderen Rand des Gehäuses 2 eingreift.

Ferner umfasst das Gehäuse einen Sensor 62, der die Drehung des Drehtellers 3 mittels eines daran angebrachten Positionssensors erfasst und mit dem PC 46 verbunden ist, um den Antriebsmotor 7 und die Verriegelung der Haube 4 zu steuern.

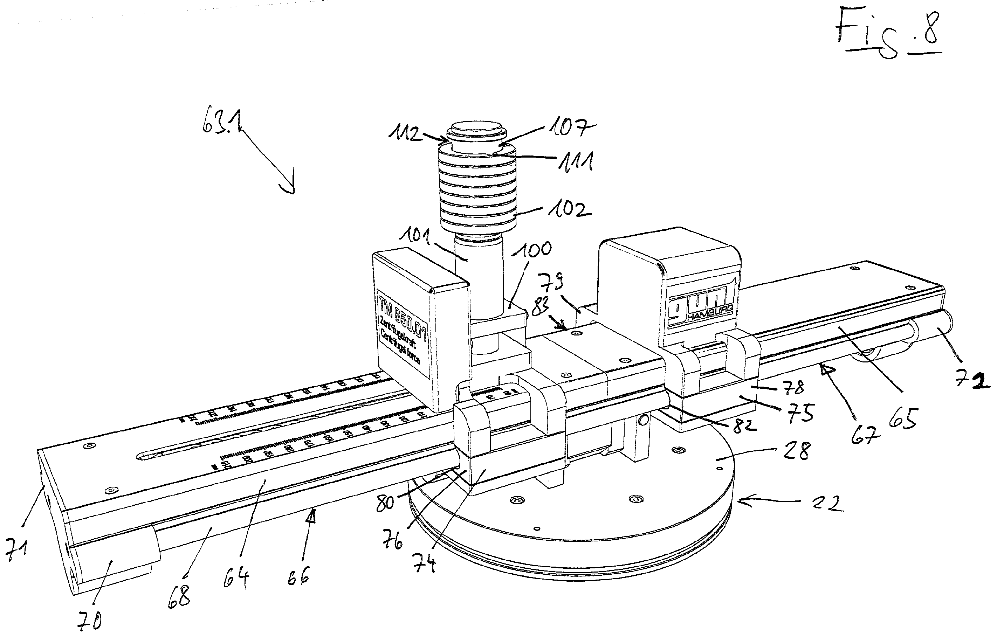

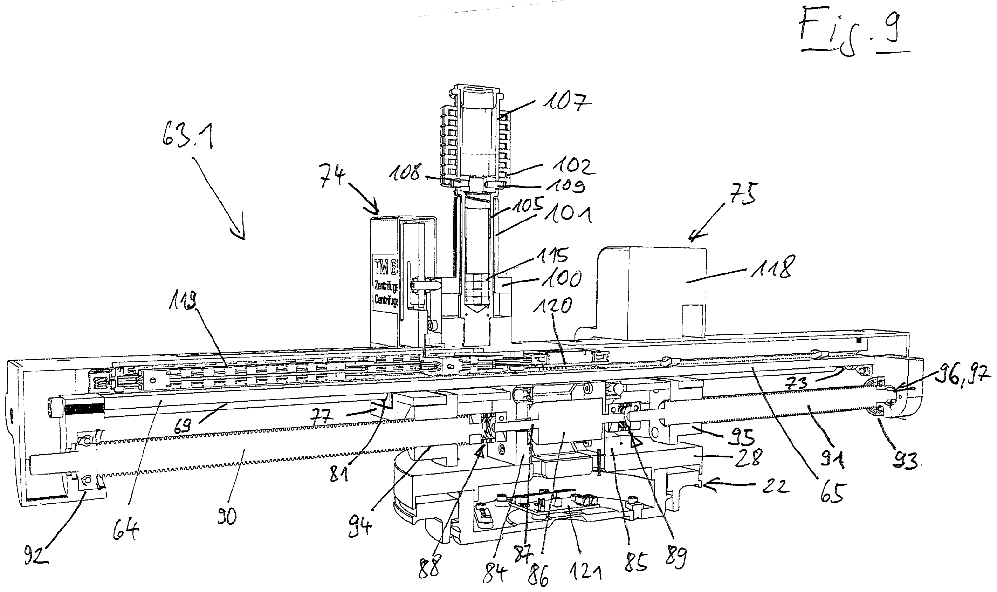

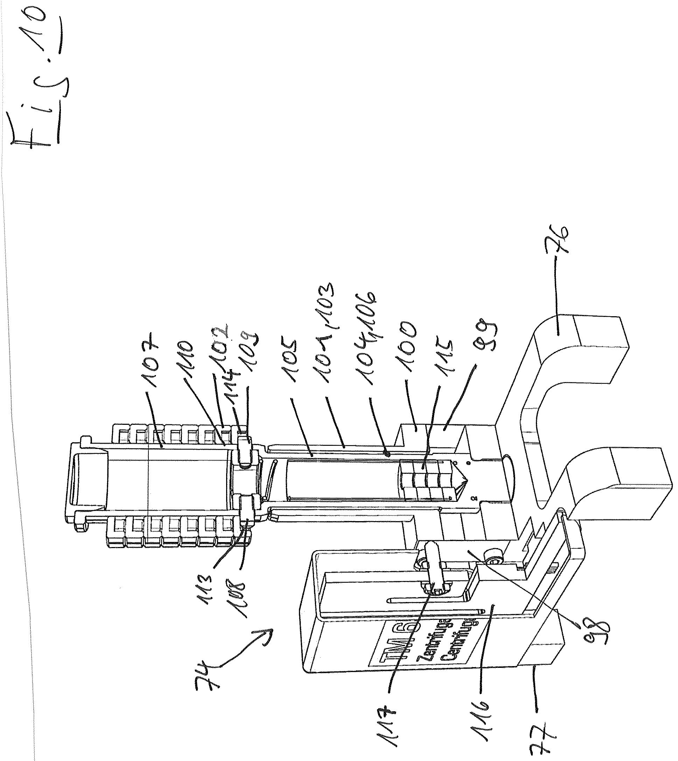

Gemäß Fig. 8 bis 10 weist bei einem Aufsetzmodul 63.1 für Versuche zur Zentrifugalkraft der Aufsetzteller 22 an der Oberseite des oberen Tellers 28 zwei horizontale, radial ausgerichtete, geradlinige Arme 64, 65 auf, die in der Mitte oberhalb des Aufsetztellers 22 miteinander verbunden sind. Die Arme 64, 65 weisen parallele Führungen 66, 67 auf, die durch zwei parallele Führungsstangen 68, 69 gebildet sind, die sich entlang der Unterseite über beide Arme 64, 65 erstrecken und an den Enden der Arme in Lagerhülsen 70, 71, 72, 73 gehalten sind.

Der eine Arm 64 wird nachfolgend als Arm und der andere Arm 65 als weiterer Arm bezeichnet. Der Teil der Führung 66 an dem einen Arm 64 wird nachfolgend als Führung und der Teil der Führung 67 am anderen Arm 65 wird nachfolgend als weitere Führung bezeichnet.

An der Oberseite des Arms 64 ist ein Schlitten 74 angeordnet und an der Oberseite des weiteren Arms ein weiterer Schlitten 75. Die Schlitten 74, 75 weisen am unteren Rand Füße 76, 77, 78, 79 auf, die sich beidseitig der Arme 64, 65 erstrecken und in denen Führungsbuchsen 80, 81, 82, 83 gehalten sind, die an den Führungsstangen 68, 69 geführt sind. Die Schlitten 74, 75 sind somit gradlinig an den Führungen 66, 67 entlang der Arme 64, 65 verlagerbar.

Zum Verlagern der beiden Schlitten 74, 75 ist unterhalb der Arme 64, 65 über Lagerböcke 84, 85 ein weiterer Antriebsmotor 86 in Form eines Schrittmotors an dem oberen Teller 28 befestigt. Von entgegengesetzten Seiten des weiteren Antriebsmotors 86 stehen die Enden einer Motorwelle 87 vor, die parallel zu den Armen 64, 65 ausgerichtet ist. Die beiden Enden der Motorwelle 87 sind über Kupplungen 88, 89 mit den inneren Enden von zu den Armen 64, 65 parallelen Gewindespindeln 90, 91 mit gegenläufigen Gewindesteigungen verbunden. Die Gewindespindeln 90, 91 sind an den äußeren Enden jeweils an Drehlagern 92, 93 gelagert, die an den äußeren Enden der Arme 64, 65 gehalten sind. Auf jeder Gewindespindel 90, 91 ist eine Spindelmutter 94, 95 angeordnet und die eine Spindelmutter 94 ist an dem Schlitten 74 und die andere Spindelmutter 95 ist an dem weiteren Schlitten 75 gehalten.

Am äußeren Ende des weiteren Armes 65 ist ein Drehwinkelsensor 96 angeordnet, der die Umdrehungen der Gewindespindel 91 erfasst, um die Stellung der Schlitten 74, 75 zu ermitteln. Am Ende der Gewindespindel 91 ist ein optischer Encoder 97 angeordnet und die Drehstellung der Gewindespindel 91 wird mithilfe des Drehwinkelsensors 96 ermittelt.

Mittels des weiteren Antriebsmotors 86 sind die beiden Schlitten 74, 75 in verschiedenen Richtungen entlang der beiden Arme 64, 65 verlagerbar.

An dem einen Schlitten 74 ist über zwei parallele, vertikale und in radialer Richtung des Arms 64 zueinander versetzt angeordnete Biegefedern 98, 99 ein quaderförmiger, horizontal ausgerichteter Sockelkörper 100 gehalten. Von der Oberseite des Sockelkörpers 100 steht eine Halterung 101 für ein oder mehrere Gewichte 102 in Form eines rohrförmigen Lagerzapfens 103 vertikal nach oben vor.

Durch den Sockelkörper 100 und den Lagerzapfen 103 hindurch erstreckt sich ein Durchgangskanal 104. Von der Oberseite des Schlittens 74 steht ein weiterer Lagerzapfen 105 vertikal nach oben vor, der sich durch den Durchgangskanal 104 hindurch erstreckt. Zwischen dem weiteren Lagerzapfen 105 und dem Lagerzapfen 103 ist ein umlaufender Spalt 106 vorhanden, der eine horizontale Verlagerung des Sockelkörpers 100 bezüglich des Schlittens 74 ermöglicht.

Der weitere Lagerzapfen 105 weist einen bezüglich des Lagerzapfens 103 nach oben vorstehenden Lagerabschnitt 107 auf, auf dem mehrere Gewichte 102 lagerbar sind. Der weitere Lagerzapfen 105 hat unten am Lagerabschnitt 107 radial nach außen vorstehende Rückhaltezapfen 108, 109. Gewichte 102 mit einem zentralen Führungsloch 110 und radial bezüglich des Führungsloches 110 erstreckten Nuten 111, 112 sind auf dem Lagerabschnitt 107 bezüglich der Rückhaltezapfen 108, 109 drehbar, sodass sie mit den Nuten 111, 112 über die Rückhaltezapfen 108, 109 hinweg nach unten auf den Lagerzapfen 103 oder in umgekehrter Richtung von dem Lagerzapfen 103 auf den weiteren Lagerzapfen 105 schiebbar sind. Oberhalb der Rückhaltezapfen 108, 109 können die Gewichte 102 so gedreht werden, dass sie auf den Rückhaltezapfen 108, 109 aufliegen und nicht heruntergleiten. Zum Arretieren der Gewichte 102 in dieser Lagerstellung weisen die Gewichte 102 jeweils an der Unterseite vom Führungsloch 110 radial nach außen erstreckte Vertiefungen 113, 114 auf, in die die Rückhaltezapfen 108, 109 eingreifen.

Im weiteren Lagerzapfen 105 sind Ausgleichsgewichte 115 zum Ausgleich von Toleranzen angeordnet.

In radialer Richtung zum Sockelkörper 100 weiter nach außen versetzt ist auf dem Schlitten 74 ein nach oben vorstehender vertikaler Tragarm 116 angeordnet. An dem Tragarm 116 ist ein auf der Seite des Sockelkörpers 100 vorstehender und an diesem anliegender Kraftsensor 117 am Tragarm 116 gehalten.

Somit ist eine beliebige Anzahl Gewichte 102 von dem weiteren Lagerzapfen 105 auf den Lagerzapfen 103 verlagerbar, um die Wirkung der Fliehkraft der auf dem Sockelkörper 100 gelagerten Gewichte 102 zu untersuchen. Dabei bleiben die insgesamt an dem Schlitten 74 gehaltenen Gewichte 102 unverändert.

Der weitere Schlitten 75 trägt ein Gegengewicht 118, welche das Gewicht des Schlittens 74 und der darauf angeordneten Gewichte 102 kompensiert.

Der Schlitten 74 ist über eine Kabelkette 119 mit einer Platine 120 verbunden, die im Zentrum der beiden Arme 64, 65 angeordnet ist. Auf der Platine 120 sitzt ein Messverstärker. Von dem Messverstärker aus wird das Messsignal nach unten zu einer Platine 49 des Basismoduls 1 weitergeleitet und dort weiterverarbeitet. Eine Motorcontrollerplatine 121 enthält die Steuerungselektronik für den Antriebsmotor 86. Die Motorcontrollerplatine 121 des Aufsetztellers 22 ist über die Steckverbinder 20, 40 mit dem Basismodul 1 verbindbar, um den Antriebsmotor 86 mit Strom zu versorgen und die Steuerungssignale vom Basismodul 1 zu empfangen.

Auch die Messsignale des Drehwinkelsensors 96 und Kraftsensors 117 werden an die Platine 49 weitergeleitet.

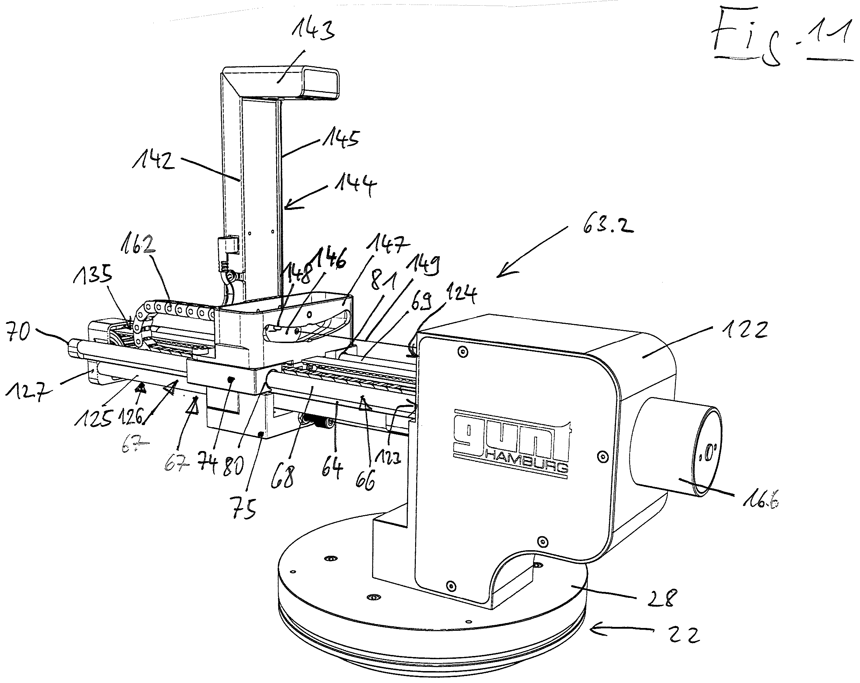

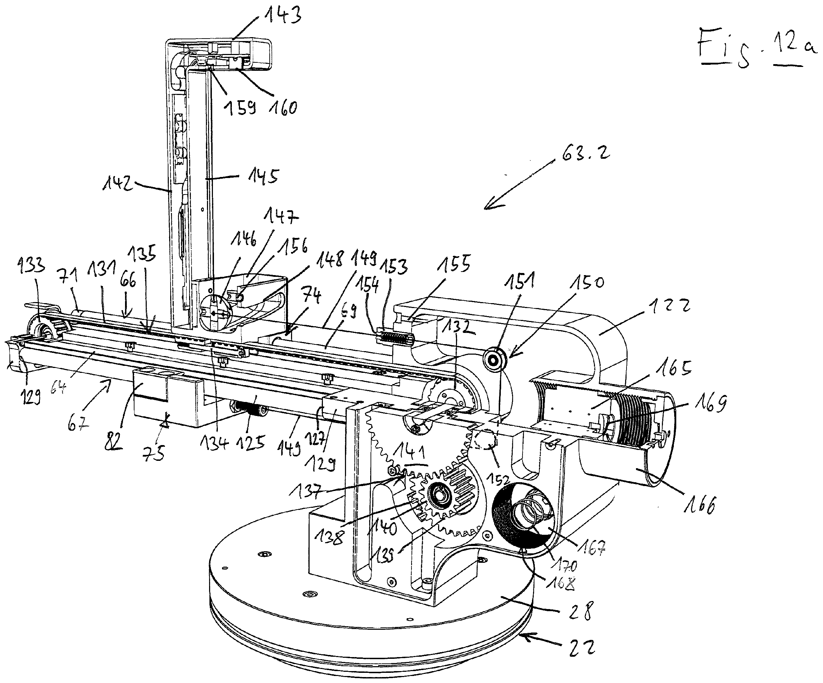

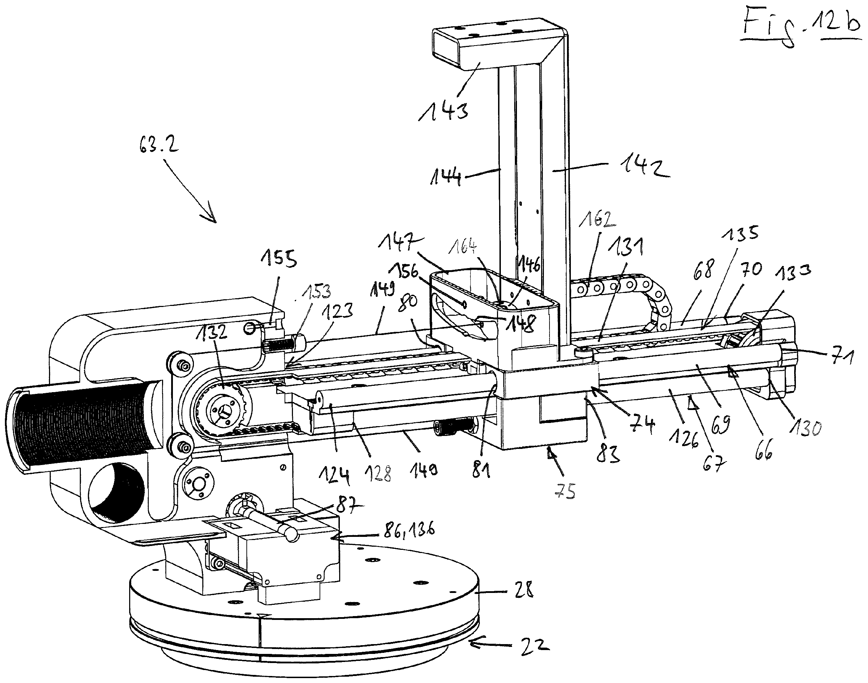

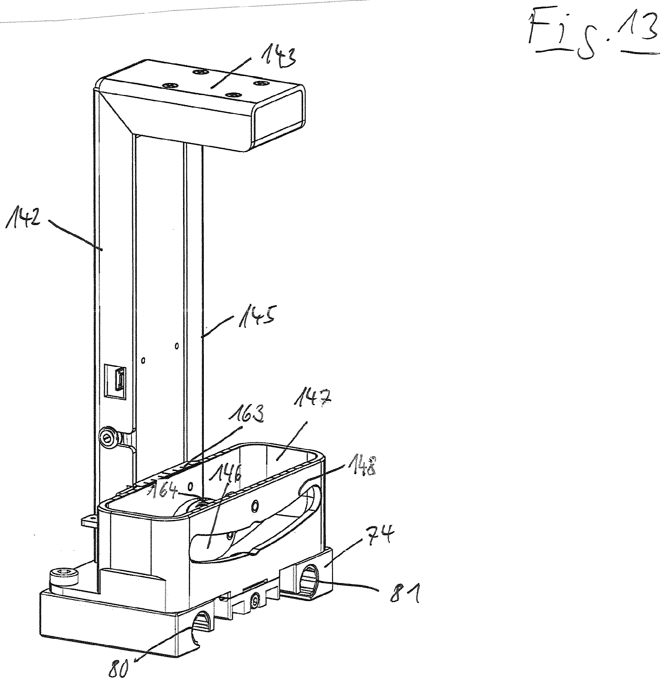

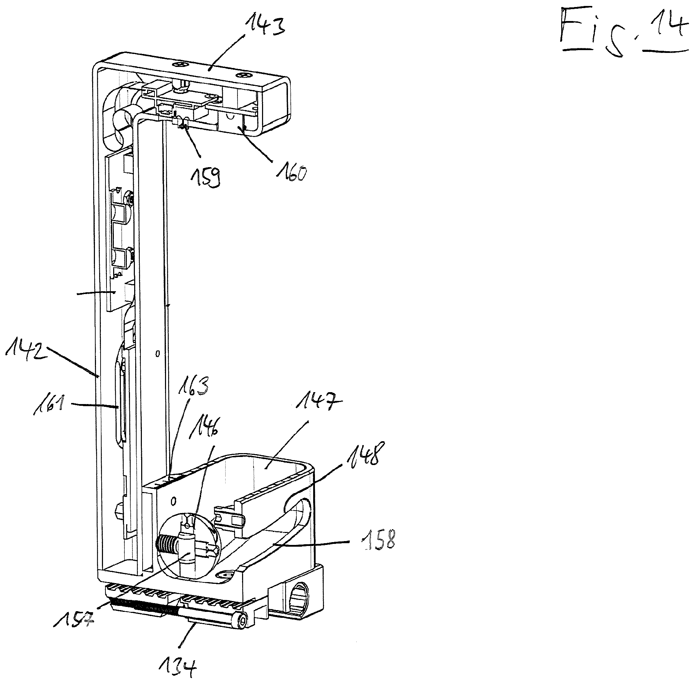

Gemäß den Fig. 11 bis 14 ist bei einem Aufsetzmodul 63.2 für Versuche zur Corioliskraft auf dem oberen Teller 28 des Aufsatztellers 22 exzentrisch ein weiteres Gehäuse 122 montiert, von dem auf einer Seite ein geradliniger Arm 64 in horizontaler Richtung vorsteht. Der Arm 64 verläuft durch die Drehachse des Aufsatztellers 22 hindurch. Die Drehachse des Aufsatztellers 22 verläuft vertikal durch das Zentrum des Aufsatztellers 22 hindurch.

Oben auf dem Arm 64 ist eine in seiner Längsrichtung erstreckte Führung 66 angeordnet, die zwei parallele Führungsstangen 68, 69 aufweist, die an einem Ende in Bohrungen 123, 124 in einer Wand des weiteren Gehäuses 122 und am anderen Ende in Lagerhülsen 70, 71 am äußeren Ende des Arms 64 gehalten sind.

Eine weitere Führung 67 mit zwei parallelen weiteren Führungsstangen 125, 126 ist unten entlang des Armes 64 erstreckt, wobei die beiden Führungsstangen 125, 126 an beiden Enden über weitere Lagerhülsen 127, 128, 129, 130 am Arm 64 gehalten sind.

Oben auf dem Arm 64 ist ein Schlitten 74 angeordnet, der Führungsbuchsen 80, 81 aufweist, die an den Führungsstangen 68, 69 der Führung 66 geführt sind.

Unten am Arm 64 ist ein weiterer Schlitten 75 angeordnet, der über weitere Führungsbuchsen 82, 83 an den weiteren Führungsstangen 125, 126 der weiteren Führung 67 geführt ist.

Der Schlitten 74 und der weitere Schlitten 75 sind mit einem umlaufenden Zahnriemen 131 verbunden, der über ein Zahnriemenrad 132 im weiteren Gehäuse 122 und ein weiteres Zahnriemenrad 133 am äußeren Ende des Arms 64 in einer vertikalen Ebene durch den Arm 64 verläuft. Der Zahnriemen 131 ist an einem Ende über ein Spannschloss 134 mit dem Schlitten 74 verbunden, um die Spannung des Zahnriemens 131 einzustellen.

Über das Zahnriemengetriebe 135 aus Zahnriemen 131 und Zahnriemenrädern 132, 133 sind der Schlitten 74 und der weitere Schlitten 75 synchron gegenläufig entlang des Arms 64 verlagerbar.

Zum Verlagern der Schlitten 74, 75 ist eine weitere Antriebseinrichtung 136 vorhanden. Diese weist einen am Gehäuse 122 gehaltenen weiteren Antriebsmotor 86 auf, die als Schrittmotor ausgebildet ist. Der Antriebsmotor 86 ist über ein Zahnradgetriebe 137 mit dem im weiteren Gehäuse 122 angeordneten Zahnriemenrad 132 gekoppelt. Das Zahnradgetriebe 137 weist eine zweistufige Übersetzung auf. Ein kleines Zahnrad 138 auf der Motorwelle des weiteren Antriebsmotors 86 kämmt mit einem großen Zahnrad 139, das drehfest mit einem weiteren kleinen Zahnrad 140 verbunden ist. Das weitere kleine Zahnrad 140 kämmt mit einem weiteren großen Zahnrad 141, das drehfest mit dem Zahnriemenrad 132 im Gehäuse 122 verbunden ist.

Über das Zahnradgetriebe 137 wird die schnelle Drehung der Motorwelle des Antriebsmotors 86 in eine verhältnismäßig langsame Drehung des Zahnriemenrades übersetzt, sodass ein Antriebsmotor 86 mit verhältnismäßig geringem Drehmoment die Schlitten 74,75 auch unter Einwirkung der Fliehkraft verlagern kann.

Vom Schlitten 74 steht nach oben ein vertikaler Tragarm 142 nach oben vor. Dieser weist am oberen Ende einen in radialer Richtung des Arms 64 nach innen vorstehenden Querbalken 143 auf. An dem Querbalken 143 ist ein Pendel 144 in Form eines Fadenpendels aufgehängt, das einen am oberen Ende am Querbalken 143 befestigten Faden 145 mit einem Pendelgewicht 146 in Form eines Kugelkörpers am unteren Ende des Fadens 145 aufweist.

Das untere Ende des Pendels 144 ist in einer oben offenen Einfassung 147 auf dem Schlitten 74 angeordnet. Die Einfassung 147 weist in einer zur Drehachse des Aufsetztellers 22 weisenden Seitenwand einen senkrecht zur Längsachse erstreckten, entsprechend der Pendelbahn des Pendelgewichtes 146 gekrümmten Schlitz 148 auf.

An dem Pendelgewicht 146 ist ein Kompensationsfaden 149 befestigt, der durch den Schlitz 148 hindurch oberhalb des Arms 64 zu einer Umlenkung 150 im Gehäuse 122 geführt ist. Diese umfasst eine Umlenkrolle 151, über die der Kompensationsfaden 149 zu einer tiefer angeordneten, weiteren Umlenkrolle 152 geleitet wird, über die der Kompensationsfaden 149 unterhalb des Arms 64 zum weiteren Schlitten 75 geführt ist, an dem er befestigt ist.

Durch den Kompensationsfaden 149 wird das Pendelgewicht 146 immer in derselben vertikal zum Arm 64 ausgerichteten Pendelebene gehalten.

Vom Gehäuse 122 steht auf derselben Seite wie der Arm 64 ein Rohr 153 mit einer Öffnung 154 am Ende vor, deren Rand an die Oberfläche des Pendelgewichtes 146 angepasst ist. Der Kompensationsfaden 149 verläuft durch das Rohr 153 hindurch über die Umlenkrollen 151 und 152 bis zum Schlitten 75. Der Schlitten 74 kann bis zum Gehäuse 122 hin verlagert werden, bis das Rohr 153 in den Schlitz 148 eingreift und das Pendelgewicht 146 am Rand der Öffnung 154 anliegt. Hierdurch kann das Pendelgewicht 146 vor der Durchführung eines Versuches zum Stillstand gebracht werden.

Das Gehäuse 122 umfasst einen Näherungsschalter 155, um die Ausgangsposition des Schlittens 74 zu ermitteln, in der das Pendelgewicht 146 an dem Rohr 153 zur Ruhe gebracht wird. Der Nährungsschalter 155 erfasst die Annäherung des Schlittens 74. Der Nährungsschalter 155 wird durch einen Magneten 156 auf dem Schlitten 74 geschaltet.

Das Pendelgewicht 146 enthält einen Permanentmagneten 157, der gemeinsam mit einem elektrisch leitfähigen Körper 158 an der Innenseite der Einfassung 147, der entsprechend der Pendelbahn des Pendelgewichtes 146 gekrümmt ist, einen Wirbelstromeffekt bewirkt, um unerwünschte Pendelbewegungen des Pendelgewichtes 146 zu dämpfen.

Am Querbalken 143 ist eine Kamera 159 zur Erfassung von Auslenkungen des Pendels 144 und eine LED-Lichtquelle 160 zur Beleuchtung des Pendels 144 angeordnet. Auf dem Schlitten 74 bzw. im Tragarm 142 ist ein kleiner Rechner 161 (z.B. ein Raspberry Pi) für die Bildauswertung der Kamera 159 und zur Steuerung der LED-Lichtquelle 160 angeordnet. Der Rechner 161 ist drahtlos über WLAN und/oder Bluetooth mit einem im Basismodul oder extern angeordneten, feststehenden Hauptrechner bzw. PC 46 verbindbar, um die Bilddaten der Kamera 159 zu übermitteln.

Vom Gehäuse 122 erstreckt sich auf der Oberseite des Tragarms 142 bis zum Schlitten 74 eine Kabelkette 162, um den Rechner 160, die Kamera 159 und die LED 160 mit Strom zu versorgen. Eine durch die Kabelkette 162 geführte elektrische Versorgungsleitung ist an die weiteren Steckverbinder 20 des Aufsatztellers 22 angeschlossen, um elektrischen Strom über den Drehteller 3 des Basismoduls 1 heranzuführen.

Auf der Oberseite weist die Einfassung 147 eine Skala 163 für die Ermittlung der Stellung des Pendels 144 auf. Die Kamera 159 ist so eingestellt, dass sie außer dem Pendelgewicht 146 auch die Skala 163 erfasst. Für die Ablesung der Position des Pendelgewichts 146 kann der Befestigungspunkt 164 des Fadens 145 an dem Kugelkörper verwendet werden.

Das Aufsetzmodul 63.2 umfasst Einrichtungen zum Auswuchten, die im Gehäuse 122 angeordnet sind. Ein Ausgleichsgewicht 165 ist mittels einer Einstelleinrichtung 166 mit Stellgewinde in Richtung des Armes 64 verstellbar und ein weiteres Ausgleichsgewicht 167 ist mittels einer weiteren Einstelleinrichtung 168 mit Stellgewinde senkrecht zur Richtung des Armes 64 verstellbar. Die Ausgleichsgewichte 165, 167 sind auf der anderen Seite der Drehachse als der größte Teil des Armes 64 angeordnet. Die Einstelleinrichtungen 166, 168 umfassen Federn 169, 170, welche die Einstelleinrichtungen 166, 168 in der eingestellten Lage sichern.

Die Verlagerung des Schlittens 74 und des weiteren Schlittens 75 bewirkt keine Unwucht, da die Verlagerung des Schlittens 74 durch die gegenläufige Verlagerung des weiteren Schlittens 75 und dem identischen Gewicht der Schlitten 74, 75 kompensiert wird.

Im Aufsetzteller 22 ist eine Platine 52 mit einer weiteren Elektronik angeordnet, insbesondere für die Steuerung des weiteren Antriebsmotors 86.

Das Aufsetzmodul 63.2 ist mit dem Aufsetzteller 22 in der beschriebenen Weise auf den Drehteller 3 des Basismoduls 1 aufsetzbar und damit koppelbar. Durch das Basismodul 1 wird das Aufsetzmodul 63.2 um die Drehachse gedreht. Das Aufsetzmodul wird mittels der Antriebseinrichtung 6 gedreht und der Schlitten 74 mittels des weiteren Antriebsmotors 86 von der Ausgangsstellung aus mit einer bestimmten Geschwindigkeit verlagert. Das Pendelgewicht 146 wird durch die Wirkung der Corioliskraft ausgelenkt, die Auslenkung mittels der Kamera 159 erfasst und an den feststehenden PC 46 für die Auswertung übermittelt.

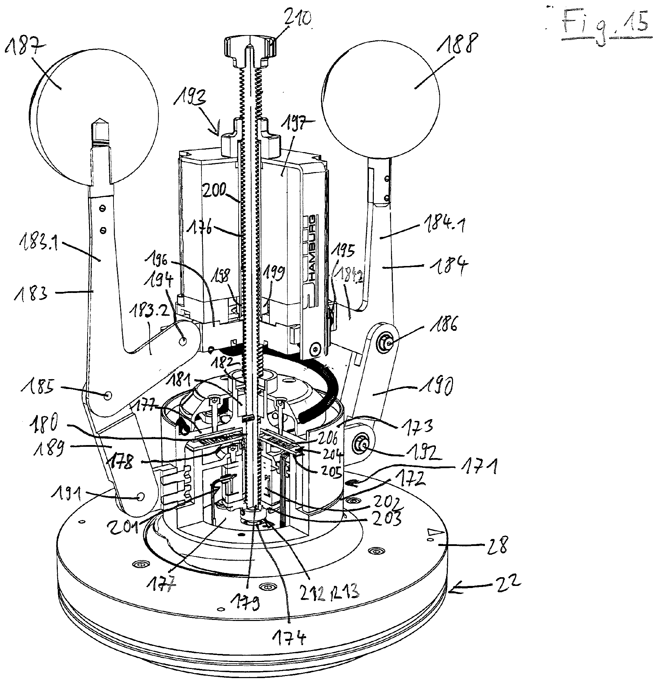

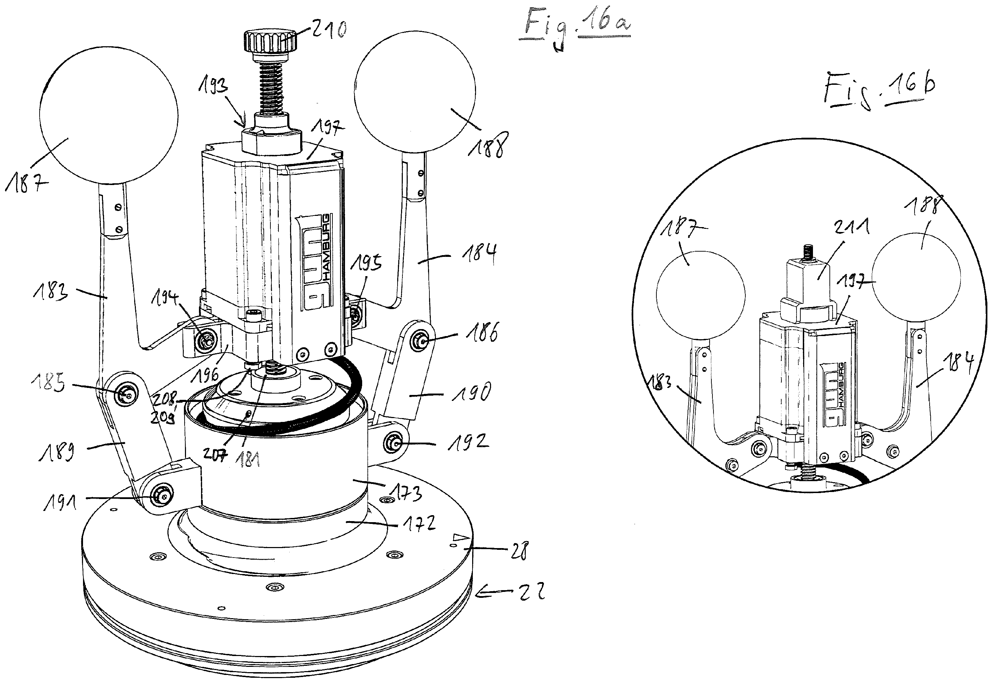

Gemäß Fig. 15 und 16 weist ein Aufsetzmodul 63.3 zur Durchführung von Versuchen zum Drehimpuls einen Rotor 171 auf, der ein fest mit dem oberen Teller 28 des Aufsetztellers 22 verbundenes Unterteil 172 und ein relativ zum Unterteil 172 drehbares Oberteil 173 umfasst. Drehlager 174, 175 ermöglichen ein Verdrehen des Oberteils 173 um eine vertikale Achse relativ zum Unterteil 172.

Das Aufsetzmodul 63.3 weist eine vertikale Gewindespindel 176 auf, die im Unterteil 172 drehbar gelagert ist. Hierfür weist das Unterteil 172 unten in einem Boden 177 das Drehlager 174 und weiter oben in einer Zwischenwand 178 ein weiteres Drehlager 178 auf. Die Gewindespindel 176 ist an gewindefreien Bereichen 179, 180 in den beiden Drehlagern 174, 175 gelagert und bezüglich des Unterteiles 172 drehbar.

Oberhalb des Unterteiles 172 ist das Oberteil 173 über einen Spannsatz 181 mit einem gewindefreien Bereich 182 der Gewindespindel 176 fest verbunden.

Das Oberteil 173 ist mit der Gewindespindel 176 relativ zum Unterteil 172 drehbar.

Die Gewindespindel 176 ist auf einer vertikalen Drehachse durch das Zentrum des Aufsatztellers 22 angeordnet.

Zwei Hebel 183, 184 sind um zwei symmetrisch bezüglich der Gewindespindel 176 angeordnete Schwenklager 185, 186 mit horizontaler Schwenkachse schwenkbar. Die beiden Hebel 183, 184 sind jeweils in einem Abstand von der Schwenkachse mit einer Masse 187, 188 gekoppelt, die als Kugelkörper ausgebildet ist.

Die beiden Hebel 183, 184 sind jeweils zweiarmig mit in einem spitzen Winkel zueinander ausgerichteten Hebelarmen 183.1, 183.2, 184.1, 184.2. Zwischen den beiden Hebelarmen sind die Hebel 183, 184 mittels der Schwenklager 185, 186 an den Enden von Gelenksstäben 189, 190 gelagert, die an den anderen Enden über weitere Schwenklager 191, 192 mit horizontalen Schwenkachsen an Lagersockeln schwenkbar gelagert sind, die fest mit dem Oberteil 173 verbunden sind.

Die beiden Hebel 183, 184 sind mit einer weiteren Antriebseinrichtung 193 gekoppelt, mittels der die beiden Hebel 183, 184 synchron in entgegengesetzte Richtungen um die beiden Schwenkachsen 185, 186 schwenkbar sind. Hierfür sind die beiden näher an der vertikalen Achse angeordneten Hebelarme über weitere Schwenklager 194, 195 mit horizontalen Schwenkachsen mit entgegengesetzten Enden einer Traverse 196 schwenkbar verbunden.

An der Traverse 196 ist ein weiterer Antriebsmotor 197 in Form eines Schrittmotors mit einer vertikalen Motorwelle 198 befestigt. Die Motorwelle 198 ist hohl und mit einem Innengewinde 199 versehen, das mit dem Außengewinde der Gewindespindel 176 kämmt. Die Motorwelle 198 ist somit zugleich eine Spindelmutter 200 zum Verlagern der Gewindespindel 176 in axialer Richtung.

Die Gewindespindel 176 stützt sich über einen Zapfen an der Oberseite des Oberteils 173 ab. Infolgedessen ist durch Drehen der Motorwelle 198 die Gewindespindel 176 bezüglich des Antriebsmotors 197 und die Traverse 196 bezüglich des Oberteils 173 verlagerbar und die Hebel 183, 184 synchron schwenkbar.

Zwischen dem Unterteil 172 und der Gewindespindel 176 ist eine Magnetkupplung 201 angeordnet. Diese weist ein drehfest mit dem Unterteil 172 verbundenes Kupplungsteil 202 und ein drehfest mit der Gewindespindel 176 verbundenes weiteres Kupplungsteil 203 auf.

Ferner ist zwischen dem Unterteil 172 und dem Oberteil 173 ein weiterer Schleifringübertrager 204 angeordnet, der ein drehfest mit dem Unterteil 172 verbundenes Übertragerteil 205 und ein drehfest mit dem Oberteil 173 verbundenes weiteres Übertragerteil 206 aufweist. Das drehfest mit dem Oberteil 173 verbundene Übertragerteil 206 ist elektrisch mit dem Antriebsmotor 197 verbunden.

Das drehfest mit dem Unterteil 172 verbundene Übertragerteil 205 ist elektrisch mit einer Motorsteuerung auf einer Platine 52 im Aufsetzteller 22 verbunden.

An der Oberseite des Oberteils 173 ist ein Endlagenschalter 207 in Form eines Reed-Kontaktes angeordnet. An der Unterseite der Traverse 196 befindet sich ein einstellbarer Halter 208 mit einem Magneten 209. Die Messsignale des Endlagenschalters 207 werden vom Oberteil 173 über den Schleifringübertrager 204 an das Unterteil 172 weitergeleitet und der weiteren Platine 52 (Motorcontroller) zugeführt. Von der Platine 52 (Motorcontroller) aus werden sie über weitere Steckverbinder 40 oder über eine drahtlose Signalübertragung auf das Basismodul 1 übertragen.

Mittels einer Rändelschraube 210 am oberen Ende der Gewindespindel 176 ist die Ausgangsposition der Gewindespindel 176 einstellbar.

Die Rändelschraube 210 ist abnehmbar, sodass eine Kalibrierhülse 211 auf das obere Ende der Gewindespindel 174 aufsetzbar ist. Die beiden Hebel 183, 184 sind zusammenschwenkbar, bis die Kugelkörper an der Kalibrierhülse 211 anliegen. Hierdurch ist die Anordnung kalibrierbar. Der Halter 208 mit dem Magneten 209 ist so einstellbar, dass die kalibrierte Endstellung der Hebel 183,184 reproduzierbar angesteuert werden kann.

Im Unterteil 172 ist ein Drehzahlsensor 212 angeordnet, der einen Encoder 213 am unteren Ende der Gewindespindel 176 erfasst. Mittels des Drehzahlsensors 212 kann die relative Drehzahl von Oberteil 173 und Unterteil 172 erfasst werden.

Für die Durchführung von Versuchen zum Drehimpuls wird das Aufsetzmodul 63 auf ein Basismodul 1 aufgesetzt und mit diesem gekoppelt. Die Kugelkörper 187, 188 werden mittels der Hebel 183, 184 von der Nullstellung ausgehend auseinandergeschwenkt. Der Aufsetzteller 22 wird mittels des Basismoduls 1 auf eine bestimmte Drehzahl beschleunigt. Hierbei ist die Magnetkupplung 201 eingekuppelt, sodass die Drehung des Aufsatztellers 22 über die Gewindespindel 176, die Spindelmutter 200 und die Traverse 196 auf die Hebel 183, 184 und das Oberteil 173 übertragen wird.

Wenn die vorgegebene Drehzahl erreicht ist, wird mittels der Magnetkupplung 201 die Gewindespindel 176 vom Unterteil 172 entkoppelt und der Aufsetzteller 22 angehalten. Aufgrund der Drehlager zwischen der Gewindespindel 176 und dem Unterteil 172 dreht die Gewindespindel 176 mit dem damit gekoppelten Oberteil 173 weiter. Danach wird der Antriebsmotor 86 eingeschaltet und werden die Kugelkörper 185, 186 zusammengeschwenkt. Hierbei erhöht sich aufgrund des Drehimpulserhaltungssatzes die Drehzahl des Oberteils 173 bezüglich des Unterteils 172. Dies kann mittels des Drehzahlsensors 212 gemessen werden.

Die jeweilige Position der Kugelkörper 187, 188 ist aufgrund der Steuerung des Antriebsmotors 86 und der Hebelgeometrie bekannt. Umgekehrt kann durch Auseinanderschwenken der Kugelkörper 187, 188 die Verminderung der Drehzahl aufgrund des Drehimpulserhaltungssatzes demonstriert und gemessen werden.

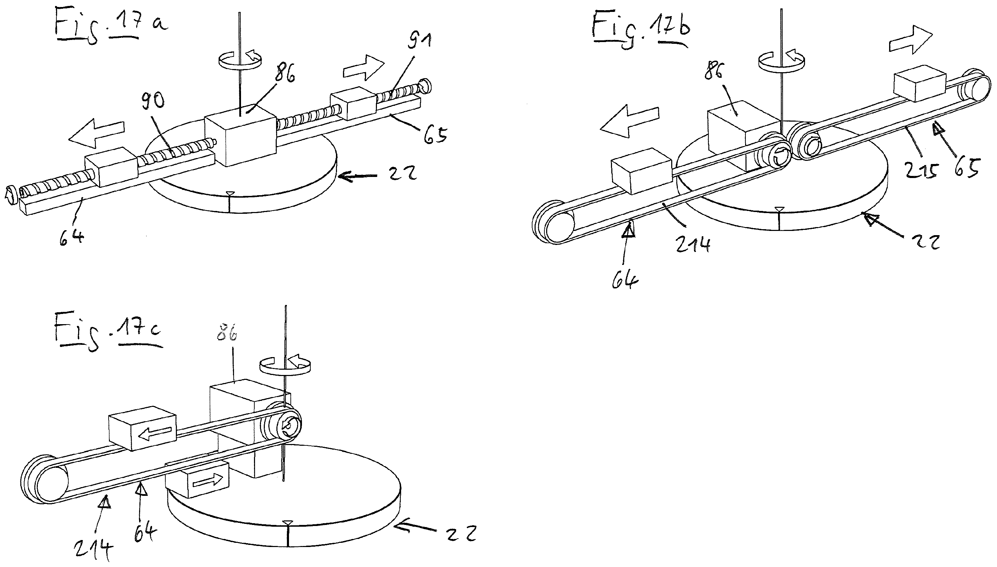

In Fig. 17 sind grundlegende Ausführungsarten der mitdrehenden Stelleinheit gezeigt. Gemäß Fig. 17a weist der Rotor zwei von der Drehachse wegweisende Arme 64, 65 auf und sind zwei Massen mittels eines Antriebsmotors 86 über Gewindespindeln 90, 91 gegenläufig entlang der Arme 64, 65 verstellbar.

Gemäß Fig. 176 b umfasst der Rotor zwei Arme 64, 65 auf verschiedenen Seiten der Drehachse, wobei Massen mittels eines Antriebsmotors 86 über Riemengetriebe 214, 215 in entgegengesetzten Richtungen entlang der Arme 64, 65 verlagerbar sind.

Gemäß Fig. 17c weist der Rotor nur einen einzigen 64 Arm auf, wobei entlang des einzigen Armes 64 Massen in entgegengesetzten Richtungen mittels eines Antriebsmotors 86 über ein Riemengetriebe 214 verlagerbar sind. Im Beispiel sind die beiden Massen oberhalb und unterhalb des Armes 64 angeordnet. Grundsätzlich können sie aber auf einer horizontalen Ebene nebeneinander verlagerbar sein.

Bei einer weiteren, nicht gezeigten Ausführungsart, sind Massen gegenläufig entlang eines einzigen Armes 64 mittels Gewindespindeln 90, 91 verlagerbar, die entgegengesetzte Steigungen haben und mit einem Antriebmotor 86 gekoppelt sind.

Statt einer einzigen Antriebseinrichtung können jeweils auch verschiedene Antriebseinrichtungen für die Verlagerung der beiden Massen vorhanden sein, die elektronisch miteinander gekoppelt sein können.

### Bezugszeichenliste

- 1: Basismodul
- 2: Gehäuse
- 3: Drehteller
- 4: Haube
- 5: Drehlager
- 6: Antriebseinrichtung
- 7: Antriebsmotor
- 8: Getriebe
- 9: Antriebsriemen
- 10: Chassis
- 11: Gummipuffer
- 12: Kupplungseinrichtung
- 13: Zapfen
- 14: Einrichtung zum drehfesten Verbinden
- 15: ovale Passfedern
- 16: Zentrierelemente
- 17: Stufe
- 18: kreiszylindrische Begrenzung
- 19: konisches Zentrierelement
- 19.1: Libelle
- 20: Steckverbinder
- 21: Federkontaktpin
- 22: Aufsetzteller
- 23: Kupplungseinrichtung
- 24: zentraler Teller
- 25: nutenartigen Kontur
- 26: Ring
- 27: komplementäre Kontur
- 28: oberer Teller
- 29: Schraubenfeder
- 30: Flansch
- 31: Absatz
- 32: weiterer Flansch
- 33: Einrichtung zum Befestigen einer Versuchsanordnung
- 34: Einrichtung zum drehfesten Verbinden
- 35: Passfedernuten
- 36: weiteres Zentrierelement
- 37: konische Vertiefung
- 38: kreiszylindrische Begrenzung
- 39: Vertiefung
- 40: Steckverbinder
- 41: längliche Buchse
- 42: Schleifringübertrager
- 43: Übertragerteil
- 44: weiteres Übertragerteil
- 45: Stromversorgung
- 46: PC
- 47, 48: drahtlose Signalübertragungseinrichtung
- 49: Platine
- 50, 51: drahtlose Signalübertragungseinrichtung
- 52: weitere Platine
- 53, 54: drahtlose Signalübertragungseinrichtung
- 55: Beschleunigungssensor
- 56, 57: Schwenkgelenk
- 58, 59: Gasdruckdämpfer
- 60: Lasche
- 61: Schlitz
- 62: Sensor
- 63, 63.1 63.2, 63.3: Aufsetzmodul
- 64, 65: Arme
- 66, 67: Führung
- 68, 69: Führungsstange
- 70-73: Lagerhülse
- 74, 75: Schlitten
- 76-79: Füße
- 80-83: Führungsbuchse
- 84, 85: Lagerbock
- 86: weiterer Antriebsmotor
- 87: Motorwelle
- 88, 89: Kupplung
- 90, 91: Gewindespindel
- 92, 93: Drehlager
- 94, 95: Spindelmutter
- 96: Drehwinkelsensor
- 97: optischer Encoder
- 98, 99: Biegefeder
- 100: Sockelkörper
- 101: Halterung
- 102: Gewichte
- 103: Lagerzapfen
- 104: Durchgangskanal
- 105: weiterer Lagerzapfen
- 106: Spalt
- 107: Lagerabschnitt
- 108, 109: Rückhaltezapfen
- 110: zentrales Führungsloch
- 111, 112: Nut
- 113, 114: Vertiefung
- 115: Ausgleichsgewicht
- 116: Tragarm
- 117: Kraftsensor
- 118: Gegengewicht
- 119: Kabelkette
- 120: Platine
- 121: Motorcontrollerplatine
- 122: weiteres Gehäuse
- 123, 124: Bohrung
- 125, 126: weitere Führungsstange
- 127-130: weitere Lagerhülse
- 131: Zahnriemen
- 132: Zahnriemenrad
- 133: weiteres Zahnriemenrad
- 134: Spannschloss
- 135: Zahnriemengetriebe
- 136: weitere Antriebseinrichtung
- 137: Zahnradgetriebe
- 138: kleines Zahnrad
- 139: großes Zahnrad
- 140: weiteres kleines Zahnrad
- 141: weiteres großes Zahnrad
- 142: vertikaler Tragarm
- 143: Querbalken
- 144: Pendel
- 145: Faden
- 146: Pendelgewicht
- 147: offene Einfassung
- 148: gekrümmter Schlitz
- 149: Kompensationsfaden
- 150: Umlenkung
- 151: Umlenkrolle
- 152: weitere Umlenkrolle
- 153: Rohr
- 154: Öffnung
- 155: Näherungsschalter
- 156: Magnet
- 157: Permanentmagnet
- 158: elektrisch leitender Körper
- 159: LED-Lichtquelle
- 160: Kamera
- 161: kleiner Rechner
- 162: Kabelkette
- 163: Skala
- 164: Befestigungspunkt
- 165: Ausgleichsgewicht
- 166: Einstelleinrichtung
- 167: Ausgleichsgewicht
- 168: Einstelleinrichtung
- 169, 170: Feder
- 171: Rotor
- 172: Unterteil
- 173: Oberteil
- 174: Drehlager
- 175: weiteres Drehlager
- 176: Gewindespindel
- 177: Boden
- 178: Zwischenwand
- 179, 180: gewindefreie Bereiche
- 181: Spannsatz
- 182: gewindefreier Bereich
- 183, 184: Hebel
- 183.1, 183.2, 184.1, 184.2: Hebelarm
- 185, 186: weiteres Schwenklager
- 187, 188: Masse
- 189, 190: Gelenkstab
- 191, 192: weiteres Schwenklager
- 193: weitere Antriebseinrichtung
- 194, 195: weiteres Schwenklager
- 196: Traverse
- 197: weiterer Antriebsmotor
- 198: vertikale Motorwelle
- 199: Innengewinde
- 200: Spindelmutter
- 201: Magnetkupplung
- 202: Kupplungsteil
- 203: weiteres Kupplungsteil
- 204: weiterer Schleifringübertrager
- 205: Übertragerteil
- 206: weiteres Übertragerteil
- 207: Endlagenschalter
- 208: Halter
- 209: Magnet
- 210: Rändelschraube
- 211: Kalibrierhülse
- 212: Drehzahlsensor
- 213: Encoder
- 214, 215: Riemengetriebe

## Patentansprüche

1. Versuchsgerät zur Durchführung von Versuchen zur Rotationsdynamik umfassend
• mindestens einen Arm,
• ein Drehlager, an dem der Arm um eine vertikale Achse drehbar gelagert ist,
• eine Antriebseinrichtung, die mit dem Arm gekoppelt ist, um diesen um die vertikale Drehachse zu drehen,
• zwei an dem mindestens einen Arm gehaltene Massen und
• mindestens eine auf dem mindestens einen Arm angeordnete, mit den beiden Massen gekoppelte weitere Antriebseinrichtung, mittels der die beiden Massen synchron in entgegengesetzte Richtungen bezüglich der vertikalen Achse verlagerbar sind,
**gekennzeichnet durch**
• ein Basismodul mit den folgenden Merkmalen:
• ein Gehäuse,
• einen Drehteller mit vertikaler Drehachse an der Oberseite des Gehäuses zum Aufsetzen eines Aufsetztellers eines erfindungsgemäßen Aufsetzmoduls mit einer Versuchsanordnung für Versuche zur Rotationsdynamik,
• ein Drehlager im Gehäuse, an dem der Drehteller um seine vertikale Achse drehbar gelagert ist,
• eine Kupplungseinrichtung an dem Drehteller zum Kuppeln mit einer weiteren Kupplungseinrichtung am Aufsetzteller eines erfindungsgemäßen Aufsetzmoduls, um den Drehteller drehfest mit dem Aufsetzteller zu verbinden, und
• einen im Gehäuse angeordneten Antriebsmotor, mit dem der Drehteller gekoppelt ist, um diesen um die Drehachse zu drehen,
und ein Aufsetzmodul mit den folgenden Merkmalen:
• eine Versuchsanordnung für Versuche der Rotationsdynamik auf einem Aufsetzteller zum Aufsetzen auf einen Drehteller des Basismoduls und eine weitere Kupplungseinrichtung am Aufsetzteller zum Kuppeln mit einer Kupplungseinrichtung an dem Drehteller des Basismoduls.

2. Versuchsgerät nach Anspruch 1, bei dem die Antriebseinrichtung einen Antriebsmotor und einen Spindelantrieb mit Gewindespindeln und Spindelmuttern mit gegenläufiger Steigung umfasst.

3. Versuchsgerät nach Anspruch 1, bei dem die Antriebseinrichtung einen Antriebsmotor und mindestens ein Riemengetriebe mit zwei Riementrums umfasst, die in entgegengesetzte Richtungen verlagerbar sind.

4. Versuchsgerät nach Anspruch 1, bei dem die Antriebseinrichtung einen Antriebsmotor und ein Hebelgetriebe umfasst, mittels dem die beiden Massen in entgegengesetzte Richtungen verlagerbar sind.

5. Versuchsgerät nach einem der Ansprüche 1 bis 4 zur Durchführung von Versuchen zur Zentrifugalkraft umfassend:
• eine Führung, die sich in Längsrichtung des Armes erstreckt,
• einen Schlitten, der an der Führung geführt ist,
• einen oberhalb des Schlittens angeordneten horizontalen Sockelkörper mit einer Halterung, an der mindestens ein Gewicht gehalten ist,
• mindestens zwei vertikale Biegefedern, die in radialer Richtung des Armes zueinander versetzt angeordnet, unten mit dem Schlitten und oben mit dem Sockelkörper verbunden sind,
• einen vertikalen Tragarm, der von dem Schlitten in radialer Richtung zum Sockelkörper versetzt nach oben vorsteht,
• einen an dem Tragarm gehaltenen, auf der Seite des Sockelkörpers vorstehenden und an diesem anliegenden Kraftsensor,
• eine weitere Führung an demselben Arm oder an einem auf der anderen Seite der Drehachse angeordneten und sich in Längsrichtung des Arms erstreckenden weiteren Arm,
• einen entlang der weiteren Führung verlagerbaren weiteren Schlitten,
• ein auf dem weiteren Schlitten angeordnetes Gegengewicht und
• mindestens eine mit dem Schlitten und mit dem weiteren Schlitten gekoppelte weitere Antriebseinrichtung, vorzugsweise mit einem Schrittmotor, mittels der der Schlitten und der weitere Schlitten synchron in entgegengesetzte Richtungen entlang der Führung und der weiteren Führung verlagerbar sind.

6. Versuchsgerät nach Anspruch 5, bei dem ein vertikaler Durchgangskanal durch den Sockelkörper und den Lagerzapfen hindurch erstreckt ist, von der Oberseite des ersten Schlittens ein weiterer Lagerzapfen vertikal hochsteht und durch den Durchgangskanal hindurch erstreckt ist, zwischen dem weiteren Lagerzapfen und dem Lagerzapfen ein umlaufender Luftspalt vorhanden ist, der eine horizontale Verlagerung des Sockelkörpers bezüglich des ersten Schlittens ermöglicht, der weitere Lagerzapfen einen bezüglich des Lagerzapfens nach oben vorstehenden Lagerabschnitt aufweist, auf den mindestens ein Gewicht mit einem zentralen Führungsloch aufgeschoben ist, wobei der weitere Lagerzapfen unten am Lagerabschnitt radial nach außen vorstehende Rückhaltezapfen aufweist, auf denen das Gewicht aufliegt, wobei das Gewicht radial bezüglich des Führungsloches erstreckte Nuten aufweist und auf dem Lagerabschnitt bezüglich der Rückhaltezapfen drehbar ist, sodass es mit den Nuten über die Rückhaltezapfen hinweg nach unten auf den Lagerzapfen oder in umgekehrter Richtung vom Lagerzapfen auf den weiteren Lagerzapfen schiebbar ist.

7. Versuchsgerät nach einem der Ansprüche 1 bis 4 zur Durchführung von Versuchen zur Corioliskraft umfassend:
• eine Führung, die sich in Längsrichtung des Armes auf einer Seite der Drehachse erstreckt,
• einen Schlitten, der an der Führung geführt ist,
• einen vom Schlitten nach oben vorstehenden vertikalen Tragarm mit einem am oberen Ende in radialer Richtung des Arms vorstehenden Querbalken,
• ein am Querbalken aufgehängtes Pendel mit einer Masse, vorzugsweise ein Kugelkörper, am unteren Ende,
• eine am Querbalken oder am Tragarm angeordnete Kamera zur Erfassung von Auslenkungen des Pendels,
• einen mit dem Pendel verbundenen, in radialer Richtung des Arms erstreckten und in einem Abstand vom ersten Schlitten festgehaltenen Kompensationsfaden,
• eine weitere Führung, die sich in Längsrichtung des Armes auf einer Seite der Drehachse erstreckt,
• einen an der weiteren Führung geführten weiteren Schlitten und
• mindestens eine mit dem Schlitten und dem weiteren Schlitten gekoppelte weitere Antriebseinrichtung, vorzugsweise ein Schrittmotor, mittels der der Schlitten und der weitere Schlitten synchron in entgegengesetzte Richtungen entlang des Armes verlagerbar sind.

8. Versuchsgerät nach Anspruch 7, bei dem die Führung entlang desselben Arms wie die weitere Führung erstreckt ist und/oder bei dem auf der anderen Seite des Armes ein Gegengewicht angeordnet ist.

9. Versuchsgerät nach Anspruch 7 oder 8, bei dem die Masse einen Permanentmagneten und der Schlitten einen elektrisch leitfähigen Körper zum Dämpfen der Schwingung des Pendels aufweist.

10. Versuchsgerät nach einem der Ansprüche 7 bis 9, bei dem der Kompensationsfaden über eine Umlenkung, vorzugsweise eine Umlenkrollen aufweisende Umlenkung, in der Nähe der Drehachse umgelenkt und zu dem weiteren Schlitten geführt ist, an dem das andere Ende des Kompensationsfadens befestigt ist.

11. Versuchsgerät nach einem der Ansprüche 7 bis 10, bei dem der Schlitten oder der Tragarm eine Elektronik mit einem Controller umfasst, die über eine Messwerterfassung mit der Kamera und/oder über eine LED-Steuerung mit der LED verbunden ist.

12. Versuchsgerät nach Anspruch 4 zur Durchführung von Versuchen zum Drehimpuls umfassend:
• einen Rotor mit einem Unterteil und einem Oberteil, die an Drehlagern um eine vertikale Achse drehbar sind,
• zwei Hebel, die um zwei symmetrisch bezüglich der vertikalen Achse angeordnete und fest mit dem Oberteil verbundene Schwenklager mit horizontaler Schwenkachse schwenkbar sind und jeweils in einem Abstand von der Schwenkachse mit einer Masse, vorzugsweise einem Kugelkörper, verbunden sind,
• eine Antriebseinrichtung, die mit dem Unterteil gekoppelt ist, um das Unterteil um die vertikale Achse zu drehen,
• eine zwischen dem Unterteil und dem Oberteil angeordnete Kupplung, die im eingekuppelten Zustand das Unterteil mit dem Oberteil drehfest miteinander verbindet und im ausgekuppelten Zustand ein Verdrehen des Oberteils bezüglich des Unterteils zulässt, und
• eine mit den beiden Hebeln gekoppelte weitere Antriebseinrichtung, mittels der die beiden Hebel synchron in entgegengesetzte Richtungen um die beiden Schwenkachsen schwenkbar sind.

13. Versuchsgerät nach Anspruch 12, bei dem die Gewindespindel oberhalb des Antriebsmotors eine Kalibrierhülse trägt, gegen die die Hebel mit der damit verbundenen Masse schwenkbar sind, um die Vorrichtung zu kalibrieren.

14. Versuchsgerät nach Anspruch 12 oder 13, bei der zwischen Unterteil und Oberteil ein Schleifringübertrager angeordnet ist, der ein drehfest mit dem Unterteil verbundenes, Anschlüsse für eine Stromversorgung und/oder Signale aufweisendes Übertragungsteil und ein drehfest mit dem Oberteil verbundenes, Anschlüsse für eine Stromversorgung und/oder Signale aufweisendes Übertragerteil aufweist, das mit dem Antriebsmotor und/oder über eine Steuerelektronik mit dem Antriebsmotor verbunden ist.

15. Versuchsgerät nach einem der Ansprüche 1 bis 14, bei der die Kupplungseinrichtung von der Oberseite des Drehtellers vorstehende, auf einem Kreis um die Drehachse angeordnete, elastisch schwenkbare kegelförmige Zapfen zum formschlüssigen Aufnehmen zwischen zur Kontur der Zapfen komplementären Konturen am Außenumfang eines zentralen Tellers und am Innenumfang eines konzentrisch zum zentralen Teller angeordneten, vertikal verlagerbaren Rings des Aufsetztellers des Aufsetzmoduls aufweist.

## Claims

1. Experimental apparatus for performing experiments on rotational dynamics comprising
• at least one arm,
• a rotary bearing on which the arm is mounted rotatably about a vertical axis,
• a drive device coupled to the arm to rotate it about the vertical axis of rotation,
• two masses held on the at least one arm and
• at least one further drive device arranged on the at least one arm and coupled to the two masses, by means of which the two masses can be displaced synchronously in opposite directions with respect to the vertical axis,
**characterized by**
• a base module having the following features:
• a housing,
• a turntable with a vertical axis of rotation on the upper side of the housing for placing an attachment plate of an attachment module according to the invention with an experimental arrangement for experiments on rotational dynamics,
• a rotary bearing in the housing, on which the turntable is rotatably mounted about its vertical axis,
• a coupling device on the turntable for coupling to a further coupling device on the attachment plate of an attachment module according to the invention, in order to connect the turntable to the attachment plate in a rotationally fixed manner, and
• a drive motor arranged in the housing, to which the turntable is coupled in order to rotate it about the axis of rotation,
and an attachment module having the following features:
• an experimental arrangement for experiments on rotational dynamics on an attachment plate for placing on a turntable of the base module and a further coupling device on the attachment plate for coupling to a coupling device on the turntable of the base module.

2. Experimental apparatus according to claim 1, wherein the drive device comprises a drive motor and a spindle drive with threaded spindles and spindle nuts with opposite pitch.

3. Experimental apparatus according to claim 1, wherein the drive device comprises a drive motor and at least one belt transmission with two belt strands which are displaceable in opposite directions.

4. Experimental apparatus according to claim 1, wherein the drive device comprises a drive motor and a lever mechanism, by means of which the two masses are displaceable in opposite directions.

5. Experimental apparatus according to one of claims 1 to 4 for performing experiments on centrifugal force comprising:
• a guide extending in the longitudinal direction of the arm,
• a carriage guided on the guide,
• a horizontal base body arranged above the carriage with a holder on which at least one weight is held,
• at least two vertical bending springs arranged offset from one another in the radial direction of the arm, connected at the bottom to the carriage and at the top to the base body,
• a vertical support arm projecting upwards from the carriage offset in the radial direction towards the base body,
• a force sensor held on the support arm, projecting on the side of the base body and bearing against it,
• a further guide on the same arm or on a further arm arranged on the other side of the axis of rotation and extending in the longitudinal direction of the arm,
• a further carriage displaceable along the further guide,
• a counterweight arranged on the further carriage and
• at least one further drive device coupled to the carriage and to the further carriage, preferably with a stepper motor, by means of which the carriage and the further carriage are displaceable synchronously in opposite directions along the guide and the further guide.

6. Experimental apparatus according to claim 5, wherein a vertical through-channel extends through the base body and the bearing journal, a further bearing journal stands vertically upwards from the upper side of the first carriage and extends through the through-channel, a circumferential air gap is present between the further bearing journal and the bearing journal, which allows a horizontal displacement of the base body with respect to the first carriage, the further bearing journal has a bearing section projecting upwards with respect to the bearing journal, onto which at least one weight with a central guide hole is pushed, wherein the further bearing journal has radially outwardly projecting retaining pins at the bottom of the bearing section, on which the weight rests, wherein the weight has grooves extending radially with respect to the guide hole and is rotatable on the bearing section with respect to the retaining pins, so that it can be pushed with the grooves over the retaining pins downwards onto the bearing journal or in the reverse direction from the bearing journal onto the further bearing journal.

7. Experimental apparatus according to one of claims 1 to 4 for performing experiments on Coriolis force comprising:
• a guide extending in the longitudinal direction of the arm on one side of the axis of rotation,
• a carriage guided on the guide,
• a vertical support arm projecting upwards from the carriage with a crossbeam projecting in the radial direction of the arm at the upper end,
• a pendulum suspended from the crossbeam with a mass, preferably a spherical body, at the lower end,
• a camera arranged on the crossbeam or on the support arm for detecting deflections of the pendulum,
• a compensation thread connected to the pendulum, extending in the radial direction of the arm and held at a distance from the first carriage,
• a further guide extending in the longitudinal direction of the arm on one side of the axis of rotation,
• a further carriage guided on the further guide and
• at least one further drive device coupled to the carriage and the further carriage, preferably a stepper motor, by means of which the carriage and the further carriage are displaceable synchronously in opposite directions along the arm.

8. Experimental apparatus according to claim 7, wherein the guide extends along the same arm as the further guide and/or wherein a counterweight is arranged on the other side of the arm.

9. Experimental apparatus according to claim 7 or 8, wherein the mass has a permanent magnet and the carriage has an electrically conductive body for damping the oscillation of the pendulum.

10. Experimental apparatus according to one of claims 7 to 9, wherein the compensation thread is deflected via a deflection unit, preferably a deflection unit having deflection pulleys, in the vicinity of the axis of rotation and guided to the further carriage, to which the other end of the compensation thread is attached.

11. Experimental apparatus according to one of claims 7 to 10, wherein the carriage or the support arm comprises electronics with a controller which is connected to the camera via a measured value acquisition unit and/or to the LED via an LED control unit.

12. Experimental apparatus according to claim 4 for performing experiments on angular momentum comprising:
• a rotor with a lower part and an upper part which are rotatable on rotary bearings about a vertical axis,
• two levers which are pivotable about two pivot bearings with a horizontal pivot axis arranged symmetrically with respect to the vertical axis and firmly connected to the upper part and are each connected to a mass, preferably a spherical body, at a distance from the pivot axis,
• a drive device coupled to the lower part to rotate the lower part about the vertical axis,
• a coupling arranged between the lower part and the upper part, which in the coupled state connects the lower part to the upper part in a rotationally fixed manner and in the uncoupled state allows rotation of the upper part with respect to the lower part, and
• a further drive device coupled to the two levers, by means of which the two levers are pivotable synchronously in opposite directions about the two pivot axes.

13. Experimental apparatus according to claim 12, wherein the threaded spindle carries a calibration sleeve above the drive motor, against which the levers with the mass connected thereto are pivotable in order to calibrate the device.

14. Experimental apparatus according to claim 12 or 13, wherein a slip ring transmitter is arranged between the lower part and the upper part, which has a transmission part connected in a rotationally fixed manner to the lower part and having connections for a power supply and/or signals, and a transmitter part connected in a rotationally fixed manner to the upper part and having connections for a power supply and/or signals, which is connected to the drive motor and/or via control electronics to the drive motor.

15. Experimental apparatus according to one of claims 1 to 14, wherein the coupling device has elastically pivotable conical pins projecting from the upper side of the turntable, arranged on a circle around the axis of rotation, for form-fitting reception between contours complementary to the contour of the pins on the outer circumference of a central plate and on the inner circumference of a vertically displaceable ring of the attachment plate of the attachment module arranged concentrically to the central plate.

## Revendications

1. Appareil d'essai destiné à la mise en œuvre d'essais sur la dynamique de rotation, comportant
• au moins un bras,
• un palier rotatif sur lequel le bras est monté de façon rotative autour d'un axe vertical,
• un dispositif d'entraînement accouplé au bras pour mettre celui-ci en rotation autour de l'axe de rotation vertical,
• deux masses maintenues sur l'au moins un bras et
• au moins un autre dispositif d'entraînement accouplé aux deux masses, disposé sur l'au moins un bras, au moyen duquel les deux masses peuvent être déplacées de manière synchrone dans des directions opposées par rapport à l'axe vertical,
**caractérisé par**
• un module de base présentant les caractéristiques suivants :
• un boîtier,
• un plateau rotatif avec l'axe de rotation vertical sur le côté supérieur du boîtier pour la mise en place d'un plateau de mise en place d'un module de mise en place selon l'invention avec un ensemble d'essai destiné à des essais sur la dynamique de rotation,
• un palier rotatif dans le boîtier, sur lequel le plateau rotatif est monté de façon rotative autour de son axe vertical,
• un dispositif d'accouplement sur le plateau rotatif, pour l'accouplement avec un autre dispositif d'accouplement sur le plateau de mise en place d'un module de mise en place selon l'invention, permettant de relier le plateau rotatif de manière solidaire en rotation au plateau de mise en place, et
• un moteur d'entraînement disposé dans le boîtier, avec lequel le plateau rotatif est accouplé pour faire tourner celui-ci autour de l'axe de rotation,
et un module de mise en place présentant les caractéristiques suivantes :
• un ensemble d'essai pour des essais de la dynamique de rotation sur un plateau de mise en place pour la mise en place sur un plateau rotatif du module de base et un autre dispositif d'accouplement sur le plateau de mise en place pour l'accouplement avec un dispositif d'accouplement sur le plateau rotatif du module de base.

2. Appareil d'essai selon la revendication 1, dans lequel le dispositif d'entraînement comporte un moteur d'entraînement et un entraînement à broche doté de broches filetées et d'écrous de broche présentant des pas contraires.

3. Appareil d'essai selon la revendication 1, dans lequel le dispositif d'entraînement comporte un moteur d'entraînement et au moins une transmission à courroie dotée de deux brins de courroie, lesquels peuvent être déplacés dans des directions opposées.

4. Appareil d'essai selon la revendication 1, dans lequel le dispositif d'entraînement comporte un moteur d'entraînement et une transmission à leviers, au moyen de laquelle les deux masses peuvent être déplacées dans des directions opposées.

5. Appareil d'essai selon l'une des revendications 1 à 4 pour la mise en œuvre d'essais sur la force centrifuge, comportant :
• un guidage s'étendant dans la direction longitudinale du bras,
• un chariot guidé sur le guidage,
• un corps de socle horizontal disposé au-dessus du chariot, avec une monture sur laquelle est maintenu au moins un poids,
• au moins deux ressorts de flexion verticaux, disposés de façon décalée l'un par rapport à l'autre dans la direction radiale du bras, lesquels sont reliés au chariot sur le bas et au corps de socle sur le haut,
• un bras de support vertical, lequel fait saillie vers le haut à partir du chariot dans la direction radiale en étant décalé par rapport au corps de socle,
• un capteur de force maintenu sur le bras de support, lequel fait saillie sur le côté du corps de socle et s'applique sur celui-ci,
• un autre guidage sur le même bras ou sur un autre bras disposé de l'autre côté de l'axe de rotation et s'étendant dans la direction longitudinale du bras,
• un autre chariot déplaçable le long de l'autre guidage,
• un contrepoids disposé sur l'autre chariot et
• au moins un autre dispositif d'entraînement accouplé au chariot ou à l'autre chariot, de préférence avec un moteur pas à pas, au moyen duquel le chariot et l'autre chariot peuvent être déplacés de manière synchrone dans des directions opposées le long du guidage et de l'autre guidage.

6. Appareil d'essai selon la revendication 5, dans lequel un canal de passage vertical s'étend à travers le corps de socle et le tourillon de palier, un autre tourillon de palier fait saillie verticalement vers le haut à partir du côté supérieur du premier chariot et s'étend à travers le canal de passage, un entrefer circonférentiel est prévu entre l'autre tourillon de palier et le tourillon de palier, permettant un déplacement horizontal du corps de socle par rapport au premier chariot, l'autre tourillon de palier présente une section de palier faisant saillie vers le haut par rapport au tourillon de palier, sur laquelle est placé au moins un poids avec un trou de guidage central, dans lequel l'autre tourillon de palier présente des tourillons de retenue faisant saillie radialement vers l'extérieur sur le bas de la section de palier, sur lesquels repose le poids, dans lequel le poids présente des rainures s'étendant radialement par rapport au trou de guidage et peut tourner sur la section de palier par rapport aux tourillons de retenue, de manière à pouvoir être poussé avec les rainures au-delà des tourillons de retenue vers le bas sur le tourillon de palier ou dans le sens inverse à partir du tourillon de palier vers l'autre tourillon de palier.

7. Appareil d'essai selon l'une des revendications 1 à 4 pour la mise en œuvre d'essais sur la force de Coriolis, comportant :
• un guidage s'étendant dans la direction longitudinale du bras sur un côté de l'axe de rotation,
• un chariot guidé sur le guidage,
• un bras de support vertical faisant saillie vers le haut à partir du chariot, avec une poutre transversale faisant saillie dans la direction radiale du bras à l'extrémité supérieure,
• un pendule suspendu à la poutre transversale avec une masse, de préférence un corps sphérique, à l'extrémité inférieure,
• une caméra disposée sur la poutre transversale ou sur le bras de support pour la détection de déviations du pendule,
• un fil de compensation relié au pendule, s'étendant dans la direction radiale du bras et maintenu à une distance du premier chariot,
• un autre guidage qui s'étend, dans la direction longitudinale du bras, sur un côté de l'axe de rotation.,
• un autre chariot guidé sur l'autre guidage et
• au moins un autre dispositif d'entraînement accouplé au chariot et à l'autre chariot, de préférence un moteur pas à pas, au moyen duquel le chariot et l'autre chariot peuvent être déplacés de manière synchrone dans des directions opposées le long du bras.

8. Appareil d'essai selon la revendication 7, dans lequel le guidage s'étend le long du même bras que l'autre guidage et/ou dans lequel un contrepoids est disposé de l'autre côté du bras.

9. Appareil d'essai selon la revendication 7 ou 8, dans lequel la masse présente un aimant permanent et le chariot présente un corps électriquement conducteur pour amortir les oscillations du pendule.

10. Appareil d'essai selon l'une des revendications 7 à 9, dans lequel le fil de compensation est détourné à proximité de l'axe de rotation par le biais d'un point de renvoi, de préférence un point de renvoi présentant des poulies de renvoi, et guidé vers l'autre chariot auquel est fixée l'autre extrémité du fil de compensation.

11. Appareil d'essai selon l'une des revendications 7 à 10, dans lequel le chariot ou le bras de support comporte une électronique dotée d'un contrôleur, laquelle est reliée à la caméra par le biais d'un détecteur de valeurs mesurées et/ou à une DEL par le biais d'une commande DEL.

12. Appareil d'essai selon la revendication 4 pour la mise en œuvre d'essais sur l'impulsion de rotation, comportant :
• un rotor doté d'une partie inférieure et d'une partie supérieure, lesquelles peuvent tourner sur des paliers rotatifs autour d'un axe vertical,
• deux leviers, lesquels sont aptes à pivoter autour de deux paliers de pivotement dotés d'un axe de pivotement horizontal, disposés symétriquement par rapport à l'axe vertical et reliés fixement à la partie supérieure, et sont reliés respectivement à une masse, de préférence à un corps sphérique, à une distance de l'axe de pivotement,
• un dispositif d'entraînement, lequel est accouplé à la partie inférieure pour faire tourner la partie inférieure autour de l'axe vertical,
• un accouplement disposé entre la partie inférieure et la partie supérieure, lequel, dans l'état accouplé, relie la partie inférieure à la partie supérieure de façon solidaire en rotation et, dans l'état désaccouplé, permet une rotation de la partie supérieure par rapport à la partie inférieure, et
• un autre dispositif d'entraînement accouplé aux deux leviers, au moyen duquel les deux levier peuvent pivoter de manière synchrone dans des directions opposées autour des deux axes de pivotement.

13. Appareil d'essai selon la revendication 12, dans lequel la broche filetée porte un manchon d'étalonnage au-dessus du moteur d'entraînement, contre lequel les leviers peuvent pivoter avec la masse reliée à ceux-ci, afin d'étalonner le système.

14. Appareil d'essai selon la revendication 12 ou 13, dans lequel un transmetteur à bague collectrice est disposé entre la partie inférieure et la partie supérieure, lequel présente une partie de transmission reliée de manière solidaire en rotation à la partie inférieure, présentant des raccords pour une alimentation électrique et/ou des signaux, ainsi qu'une partie de transmetteur reliée de manière solidaire en rotation à la partie supérieure, présentant des raccords pour une alimentation électrique et/ou des signaux, laquelle est reliée au moteur d'entraînement et/ou au moteur d'entraînement par le biais d'une électronique de commande.

15. Appareil d'essai selon l'une des revendications 1 à 14, dans lequel le dispositif d'accouplement présente des tourillons coniques aptes à pivoter de façon élastique, faisant saillie à partir du côté supérieur du plateau rotatif, disposés sur un cercle autour de l'axe de rotation, lesquels sont destinés à être reçus par complémentarité de forme entre des contours complémentaires au contour du tourillon situés sur le pourtour extérieur d'un plateau central et sur le pourtour intérieur d'un anneau déplaçable verticalement du plateau de mise en place du module de mise en place, lequel est disposé de façon concentrique par rapport au plateau central.
